# EUROPÄISCHE PATENTSCHRIFT

(11) **EP 3 965 196 B1**
(45) Veröffentlichungstag und Bekanntmachung des Hinweises auf die Patenterteilung: **28.10.2026**
(21) Anmeldenummer: 20194940.1
(22) Anmeldetag: 07.09.2020
(51) Int. Cl.: H01M 10/0525, H01M 10/04, H01M 10/0587, H01M 50/152, H01M 50/169, H01M 50/188, H01M 50/566, H01M 50/538, H01M 50/545

(54) **ENERGIESPEICHERZELLE**
ENERGY STORAGE CELL
CELLULE D'ACCUMULATION D'ÉNERGIE

(43) Veröffentlichungstag der Anmeldung: 09.03.2022
(73) Patentinhaber: VARTA Microbattery GmbH, 73479 Ellwangen Jagst (DE)
(72) Erfinder: Elmer, Martin, 73479 Ellwangen (DE); Ensling, David, 73479 Ellwangen (DE); Fürst, Martin, 73492 Rainau-Schwabsberg (DE); Stock, Stefan, 73492 Rainau (DE)
(74) Vertreter: Ostertag & Partner Patentanwälte mbB

(56) Entgegenhaltungen:
- EP-A1- 0 907 974
- EP-A1- 3 188 280
- WO-A1-2017/215900
- US-A1- 2014 087 217

## Beschreibung

Die nachstehend beschriebene Erfindung betrifft eine Energiespeicherzelle, die einen Elektroden-Separator-Verbund umfasst.

### ANWENDUNGSGEBIET UND STAND DER TECHNIK

Elektrochemische Zellen sind dazu in der Lage, gespeicherte chemische Energie durch eine Redoxreaktion in elektrische Energie umzuwandeln. Sie umfassen in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden Ionenstrom innerhalb der Zelle. Dieser Ionenstrom durchquert den Separator und wird durch einen Ionen leitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür oftmals Partikel auf Kohlenstoffbasis, wie beispielsweise graphitischer Kohlenstoff, eingesetzt. Es können auch andere, nicht-graphitische Kohlenstoffmaterialien verwendet werden, die zur Interkalation von Lithium geeignet sind. Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z.B. Ether und Ester der Kohlensäure).

Die Kompositelektroden werden bei der Herstellung einer Lithium-Ionen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Verbundkörper in Form eines Wickels gebildet oder zu einem Wickel verarbeitet. In der Regel umfasst er die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm) Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

Bei der Entwicklung verbesserter elektrochemischer Zellen sind allerdings noch andere Faktoren zu beachten als nur die Energiedichte. Außerordentlich wichtige Parameter sind auch der Innenwiderstand der Zellen, der möglichst niedrig gehalten werden sollte, um Leistungsverluste beim Laden und Entladen zu verringern, sowie die thermische Anbindung der Elektroden, die für eine Temperaturregulierung der Zelle essenziell sein kann. Auch diese Parameter sind für zylindrische Rundzellen, die einen Verbundkörper in Form eines Wickels enthalten, sehr wichtig. Beim Schnellladen von Zellen können aufgrund von Leistungsverlusten Wärmestaus in den Zellen auftreten, die zu massiven thermomechanischen Belastungen und in der Folge zu Verformungen und Beschädigungen der Zellstruktur führen können. Das Risiko besteht verstärkt dann, wenn die elektrische Anbindung der Stromkollektoren über separate elektrische, an die Stromkollektoren geschweißte Ableiterfahnen erfolgt, die axial aus gewickelten Verbundkörpern austreten, da bei starken Belastungen beim Laden oder Entladen eine Erwärmung lokal an diesen Ableiterfahnen auftreten kann.

In der WO 2017/215900 A1 sind Zellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle mindestens ein Kontaktelement auf, das auf einem der Längsränder derart aufliegt, dass sich eine linienartige Kontaktzone ergibt. Das Kontaktelement ist mit dem Längsrand entlang der linienartigen Kontaktzone durch Verschweißung verbunden. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen werden.

Ungeachtet dessen kann es durch Alterung, durch mechanische Beschädigung, durch fehlerhaftes Laden elektrochemischer Zellen und aus einigen weiteren Gründen zu Fehlfunktionen kommen, die in einer unerwünschten Erwärmung oder einer Zellgasung resultieren können, in Folge derer der Druck in der Zelle unkontrolliert ansteigen kann. Für solche Fälle weisen elektrochemische Zellen in der Regel Sicherheitslösungen auf. Hervorzuheben ist in diesem Zusammenhang insbesondere der Einsatz sogenannter CIDs (eng.: current interrupt device), die bei zu hohem Gasdruck innerhalb einer Zelle den elektrischen Kontakt zwischen einem Pol und der damit verbundenen Elektrode unterbrechen.

Allerdings sind CIDs relativ komplex aufgebaut und werden meist als zusätzliche Baugruppe verbaut. Sie nehmen somit innerhalb eines Zellgehäuses relativ viel Raum ein, was dem Ziel der Verbesserung der Energiedichte zuwiderläuft.

Eine typische Zelle mit einem CID ist beispielsweise aus der EP 3188280 A1 bekannt. Die in Figur 3 dargestellte Zelle weist eine mehrteilige Verschlussbaugruppe mit einem CID auf. Diese ist über einen U-förmig gebogenen Ableiter mit der Stirnseite eines Elektrodenwickels verbunden. Der U-förmige Ableiter nimmt dabei vergleichsweise viel Platz ein, was zu Lasten der Energiedichte der Zelle geht.

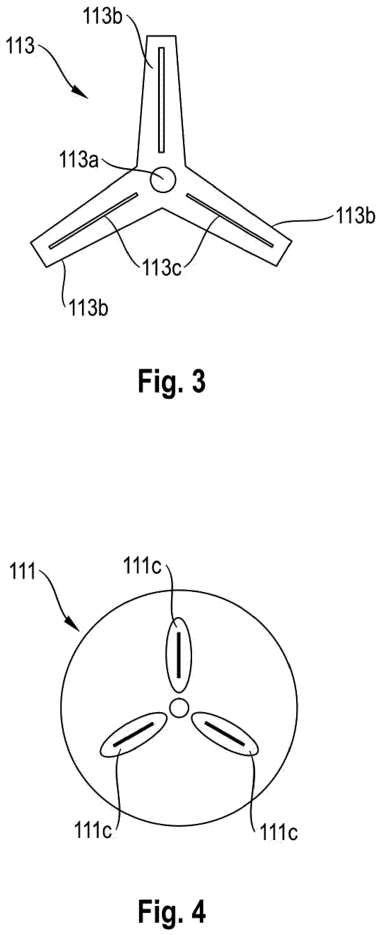

Aus der US 2014/0087217 A1 ist ein Deckel für ein prismatisches Zellgehäuse bekannt, in den u.a. eine Überdrucksicherung (Figur 3) integriert ist. Diese umfasst eine Membran, die mit einer Verbindungsplatte verbunden ist, die wiederum an einen Stromsammler gekoppelt ist. Eine direkte Verbindung zwischen der Membran und dem in dem Gehäuse enthaltenen Elektrodenstapel besteht nicht.

Aus der WO 97/38455 A1 ist eine komplexe, vielteilige Verschlussbaugruppe bekannt. Diese ist, wie im Fall der aus der EP 3188280 A1 bekannten Zelle, über einen angeschweißen Ableiter mit einer der Elektroden verbunden.

### AUFGABE UND LÖSUNG

Der vorliegenden Erfindung lag die Aufgabe zugrunde, Energiespeicherzellen bereitzustellen, die sich durch eine gegenüber dem Stand der Technik verbesserte Energiedichte sowie eine homogene Stromverteilung möglichst über die gesamte Fläche und Länge ihrer Elektroden auszeichnen und die gleichzeitig hervorragende Charakteristiken bezüglich ihres Innenwiderstands und ihrer passiven Entwärmungsfähigkeiten besitzen. Insbesondere sollen sich die Zellen aber auch durch eine verbesserte Sicherheit und Herstellbarkeit auszeichnen.

Diese Aufgabe wird durch die Energiespeicherzelle mit den Merkmalen des Anspruchs 1 gelöst. Bevorzugte Ausgestaltungen der Zelle ergeben sich aus den abhängigen Ansprüchen.

Die erfindungsgemäße Energiespeicherzelle weist stets die unmittelbar folgenden Merkmale a. bis j. auf:
a. Die Zelle umfasst einen Elektroden-Separator-Verbund mit der Sequenz Anode / Separator / Kathode.
b. Der Elektroden-Separator-Verbund liegt in Form eines zylindrischen Wickels mit zwei endständigen Stirnseiten und einem Wickelmantel vor.
c. Die Zelle umfasst ein Gehäuse, das ein metallisches, rohrförmig ausgebildetes Gehäuseteil mit einer endständigen kreisförmigen Öffnung umfasst.
d. In dem Gehäuse ist der als Wickel ausgebildete Elektroden-Separator-Verbund axial ausgerichtet, so dass der Wickelmantel an der Innenseite des rohrförmig ausgebildeten Gehäuseteils anliegt.
e. Die Anode ist bandförmig ausgebildet und umfasst einen bandförmigen Anodenstromkollektor mit einem ersten Längsrand und einem zweiten Längsrand.
f. Der Anodenstromkollektor umfasst einen streifenförmigen Hauptbereich, der mit einer Schicht aus negativem Elektrodenmaterial beladen ist, sowie einen freien Randstreifen, der sich entlang des ersten Längsrands erstreckt und der nicht mit dem Elektrodenmaterial beladen ist.
g. Die Kathode ist bandförmig ausgebildet und umfasst einen bandförmigen Kathodenstromkollektor mit einem ersten Längsrand und einem zweiten Längsrand.
h. Der Kathodenstromkollektor umfasst einen streifenförmigen Hauptbereich, der mit einer Schicht aus positivem Elektrodenmaterial beladen ist, sowie einen freien Randstreifen, der sich entlang des ersten Längsrands erstreckt und der nicht mit dem Elektrodenmaterial beladen ist.
i. Die Anode und die Kathode sind derart ausgebildet und/oder innerhalb des Elektroden-Separator-Verbunds derart zueinander angeordnet, dass der erste Längsrand des Anodenstromkollektors aus einer der endständigen Stirnseiten und der erste Längsrand des Kathodenstromkollektors aus der anderen der endständigen Stirnseiten austritt.
j. Die Zelle umfasst ein zumindest teilweise metallisch ausgebildetes Kontaktelement, das in unmittelbarem Kontakt mit einem der ersten Längsränder steht und das mit diesem Längsrand durch Verschweißung verbunden ist.

### Bevorzugte Ausführungsformen des elektrochemischen Systems

Grundsätzlich umfasst die Erfindung Energiespeicherzellen unabhängig von ihrer elektrochemischen Ausgestaltung. In besonders bevorzugten Ausführungsformen ist die erfindungsgemäße Energiespeicherzelle jedoch eine Lithium-Ionen-Zelle, insbesondere eine sekundäre Lithium-Ionen-Zelle. Für Anode und Kathode der Energiespeicherzelle können daher im Grunde sämtliche für sekundäre Lithium-Ionen-Zellen bekannten Elektrodenmaterialien verwendet werden.

In der negativen Elektrode einer als Lithium-Ionen-Zelle ausgebildeten erfindungsgemäßen Energiespeicherzelle können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid, enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Auch dünne Anoden aus metallischem Lithium können eingesetzt werden.

Für die positive Elektrode einer als Lithium-Ionen-Zelle ausgebildeten erfindungsgemäßen Energiespeicherzelle kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden einer als Lithium-Ionen-Zelle ausgebildeten erfindungsgemäßen Energiespeicherzelle bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), Polyacrylat oder Carboxymethylzellulose. Übliche Leitmittel sind Ruß und Metallpulver.

Die erfindungsgemäße Energiespeicherzelle umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

### Bevorzugte Ausführungsformen des Separators

Der Elektroden-Separator-Verbund umfasst bevorzugt mindestens einen bandförmigen Separator, besonders bevorzugt zwei bandförmige Separatoren, der oder die jeweils einen ersten und einen zweiten Längsrand aufweisen.

Bevorzugt werden die Separatoren aus elektrisch isolierenden Kunststofffolien gebildet. Es ist bevorzugt, dass die Separatoren von dem Elektrolyten durchdrungen werden kann. Zu diesem Zweck können die verwendeten Kunststofffolien beispielsweise Mikroporen aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

In einigen Ausführungsformen kann es sich bei dem Separator oder den Separatoren des Verbundes auch um eine oder mehrere Schichten aus einem Festelektrolyten handeln.

### Bevorzugte Struktur des als Wickel ausgebildeten Elektroden-Separator-Verbunds

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellung des Elektroden-Separator-Verbunds werden die bandförmigen Elektroden gemeinsam mit dem oder den bandförmigen Separatoren einer Wickelvorrichtung zugeführt und in dieser bevorzugt um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der auf einem Wickeldorn sitzt und nach dem Wickeln im Wickel verbleibt. Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Es ist bevorzugt, dass die Längsränder des oder der Separatoren die Stirnseiten des als Wickel ausgebildeten Elektroden-Separator-Verbunds bilden.

Es ist weiterhin bevorzugt, dass die aus den endständigen Stirnseiten des Wickels austretenden Längsränder des Anodenstromkollektors und/oder des Kathodenstromkollektors nicht mehr als 5000 µm, bevorzugt nicht mehr als 3500 µm, aus den Stirnseiten, insbesondere aus den von den Längsrändern des oder der Separatoren gebildeten Stirnseiten, herausragen.

Besonders bevorzugt ragt der Längsrand des Anodenstromkollektors aus der Stirnseite des Wickels nicht mehr als 2500 µm, besonders bevorzugt nicht mehr als 1500 µm, heraus. Besonders bevorzugt ragt der Längsrand des Kathodenstromkollektors aus der Stirnseite des Wickels nicht mehr als 3500 µm, besonders bevorzugt nicht mehr als 2500 µm, heraus.

Bevorzugt sind die bandförmige Anode und die bandförmige Kathode innerhalb des Elektroden-Separator-Verbunds versetzt zueinander angeordnet, um zu gewährleisten, dass der erste Längsrand des Anodenstromkollektors aus einer der endständigen Stirnseiten und der erste Längsrand des Kathodenstromkollektors aus der anderen der endständigen Stirnseiten austritt.

### Bevorzugte Ausführungsformen der Stromkollektoren

Die Stromkollektoren der Energiespeicherzelle dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert. Im Falle einer als Lithium-Ionen-Zelle ausgebildeten erfindungsgemäßen Energiespeicherzelle eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich im Falle einer als Lithium-Ionen-Zelle ausgebildeten erfindungsgemäßen Energiespeicherzelle insbesondere Aluminium oder auch andere elektrisch leitfähige Materialien, darunter auch Aluminiumlegierungen.

Bevorzugt handelt es sich bei dem Anodenstromkollektor und/oder dem Kathodenstromkollektor jeweils um eine Metallfolie mit einer Dicke im Bereich von 4 µm bis 30 µm, insbesondere eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

In einigen besonders bevorzugten Ausgestaltungen kann die erfindungsgemäße Zelle durch mindestens eines der unmittelbar folgenden Merkmale a. bis c. gekennzeichnet sein:
a. Der streifenförmige Hauptbereich des mit dem Kontaktelement durch Verschweißung verbundenen Stromkollektors weist eine Vielzahl von Durchbrechungen auf.
b. Bei den Durchbrechungen in dem Hauptbereich handelt es sich um runde oder eckige Löcher, insbesondere Stanz- oder Bohrlöcher.
c. Der mit dem Kontaktelement durch Verschweißung verbundene Stromkollektor ist in dem Hauptbereich perforiert, insbesondere durch Rundloch- oder Schlitzlochperforation.

Bevorzugt sind die unmittelbar vorstehenden Merkmale a. und b. oder a. und c., besonders bevorzugt die drei unmittelbar vorstehenden Merkmale a. bis c., in Kombination miteinander realisiert.

Die Vielzahl von Durchbrechungen resultiert in einem verringerten Volumen und auch in einem verringerten Gewicht des Stromkollektors. Dies macht es möglich, mehr Aktivmaterial in die Zelle einzubringen und auf diese Weise die Energiedichte der Zelle drastisch zu steigern. Energiedichtenerhöhungen bis in den zweistelligen Prozentbereich können so erreicht werden.

In einigen bevorzugten Ausführungsformen sind die Durchbrechungen mittels Laser in den streifenförmigen Hauptbereich eingebracht.

Grundsätzlich ist die Geometrie der Durchbrechungen nicht erfindungswesentlich. Wichtig ist, dass in Folge der Einbringung der Durchbrechungen die Masse des Stromkollektors verringert und mehr Platz für Aktivmaterial da ist, da die Durchbrechungen mit dem Aktivmaterial befüllt werden können.

Sehr vorteilhaft kann sein, bei der Einbringung der Durchbrechungen darauf zu achten, dass der maximale Durchmesser der Durchbrechungen nicht zu groß ist. Bevorzugt sollten die Dimensionen der Durchbrechungen nicht mehr als das doppelte der Dicke der Schicht des Elektrodenmaterials auf dem jeweiligen Stromkollektor betragen.

In besonders bevorzugten Ausgestaltungen ist die erfindungsgemäße Zelle durch das unmittelbar folgende Merkmal a. gekennzeichnet:
a. Die Durchbrechungen in dem Stromkollektor, insbesondere in dem Hauptbereich, weisen Durchmesser im Bereich von 1 µm bis 3000 µm auf.

Innerhalb dieses bevorzugten Bereiches sind Durchmesser im Bereich von 10 µm bis 2000 µm, bevorzugt von 10 µm bis 1000 µm, insbesondere von 50 µm bis 250 µm, weiter bevorzugt.

Besonders bevorzugt zeichnet sich die erfindungsgemäße Zelle weiterhin durch mindestens eines der unmittelbar folgenden Merkmale a. und b. aus:
a. Der mit dem Kontaktelement durch Verschweißung verbundene Stromkollektor weist zumindest in einem Teilabschnitt des Hauptbereichs ein geringeres Flächengewicht auf als der freie Randstreifen desselben Stromkollektors.
b. Der mit dem Kontaktelement durch Verschweißung verbundene Stromkollektor weist in dem freien Randstreifen keine oder weniger Durchbrechungen pro Flächeneinheit als in dem Hauptbereich auf.

Es ist besonders bevorzugt, dass die unmittelbar vorstehenden Merkmale a. und b. in Kombination miteinander verwirklicht sind.

Die freien Randstreifen von Anoden- und Kathodenstromkollektor begrenzen den Hauptbereich zu den ersten Längsrändern hin. Bevorzugt umfassen sowohl der Anoden- als auch der Kathodenstromkollektor freie Randstreifen jeweils entlang ihren beiden Längsrändern.

Die Durchbrechungen charakterisieren den Hauptbereich. Mit anderen Worten, die Grenze zwischen dem Hauptbereich und dem oder den freien Randstreifen entspricht einem Übergang zwischen Bereichen mit und ohne Durchbrechungen.

Die Durchbrechungen sind bevorzugt im Wesentlichen gleichmäßig über den Hauptbereich verteilt.

In weiteren besonders bevorzugten Ausführungsformen zeichnet sich die erfindungsgemäße Zelle durch mindestens eines der unmittelbar folgenden Merkmale a. bis c. aus:
a. Das Flächengewicht des Stromkollektors ist in dem Hauptbereich gegenüber dem Flächengewicht des Stromkollektors in dem freien Randstreifen um 5 % bis 80 % reduziert.
b. Der Stromkollektor weist in dem Hauptbereich eine Lochfläche im Bereich von 5 % bis 80 % auf.
c. Der Stromkollektor weist in dem Hauptbereich eine Zugfestigkeit von 20 N/mm² bis 250 N/mm² auf.

Es ist besonders bevorzugt, dass die unmittelbar vorstehenden Merkmale a. bis c. in Kombination miteinander verwirklicht sind.

Die Bestimmung der Lochfläche, die häufig auch als freier Querschnitt bezeichnet wird, kann gemäß ISO 7806-1983 erfolgen. Die Zugfestigkeit des Stromkollektors in dem Hauptbereich ist gegenüber Stromkollektoren ohne die Durchbrechungen verringert. Ihre Bestimmung kann gemäß DIN EN ISO 527 Teil 3 erfolgen.

Es ist bevorzugt, dass der Anodenstromkollektor und der Kathodenstromkollektor bezüglich der Durchbrechungen gleich oder ähnlich ausgebildetsind. Die jeweils erzielbaren Energiedichteverbesserungen addieren sich. Die erfindungsgemäße Zelle zeichnet sich daher in bevorzugten Ausführungsformen weiterhin durch mindestens eines der unmittelbar folgenden Merkmale a. bis c. aus:
a. Der streifenförmige Hauptbereich des Anodenstromkollektors und der Hauptbereich des Kathodenstromkollektors sind beide durch eine Vielzahl der Durchbrechungen gekennzeichnet.
b. Die Zelle umfasst das Kontaktelement, das mit dem einem der ersten Längsränder durch Verschweißung verbunden ist, als erstes Kontaktelement, sowie weiterhin ein zweites metallisches Kontaktelement, das mit dem anderen der ersten Längsränder durch Verschweißung verbunden ist.

Es ist besonders bevorzugt, dass die unmittelbar vorstehenden Merkmale a. und b. in Kombination miteinander verwirklicht sind.

Die vorstehend beschriebenen bevorzugten Ausgestaltungen des mit den Durchbrechungen versehenen Stromkollektors sind unabhängig voneinander auf den Anodenstromkollektor und den Kathodenstromkollektor anwendbar.

### Erfindungsgemäße Lösung

Besonders zeichnet sich die Zelle durch die beiden folgenden Merkmale k. und l. aus:
k. Das Kontaktelement umfasst einen kreisförmigen Rand und verschließt die endständige kreisförmige Öffnung des rohrförmig ausgebildeten Gehäuseteils gas- und flüssigkeitsdicht, und
l. das Kontaktelement umfasst oder ist eine metallische Membran, die elektrisch mit dem einen der ersten Längsränder verbunden ist und sich wölbt, wenn ein Druck in dem Gehäuse einen Schwellwert überschreitet, wobei der elektrische Kontakt des Kontaktelements zu dem einen der ersten Längsränder verloren geht.

Das Kontaktelement des erfindungsgemäßen elektrochemischen Speicherelements wird somit zum einen zur Kontaktierung einer der Elektroden eingesetzt wird und dient gleichzeitig als Gehäuseteil. Zum anderen verfügt das Kontaktelement dank der Membran über eine CID-Funktionalität, wobei die Membran als zentrales Element des CID sehr nahe und mit sehr geringem elektrischen Widerstand an den Elektrodenverbund angeschlossen ist. Durch den erfindungsgemäßen Aufbau kann, im Vergleich zu klassischen CID-Konstruktionen, mit weniger Bauteilen gearbeitet werden, da einige Bauteile mehrere Funktionen gleichzeitig übernehmen. Mit besonderem Vorteil steht somit mehr Raum für Aktivmaterial zur Verfügung. Darüber hinaus vereinfacht sich die Zellmontage.

Der Verlust des elektrischen Kontakts zu dem einen der ersten Längsränder wird in der Regel dadurch bewirkt, dass der mit dem Kontaktelement verbundene eine der ersten Längsränder in Folge der Wölbung der Membran von dem Kontaktelement abreißt. Bevorzugt wird dabei die Schweißverbindung zwischen dem Kontaktelement und dem einen der ersten Längsränder zerstört. Es ist aber auch denkbar, dass der eine der ersten Längsränder eine Sollrisslinie umfasst, entlang der er es zu dem Abriss kommt. Eine solche Sollrisslinie kann sich beispielsweise entlang der oben beschriebenen Grenze zwischen dem mit Durchbrechungen versehenen Hauptbereich und einem der freien Randstreifen ziehen. Bei einer mechanischen Belastung senkrecht zur Haupterstreckungsrichtung in Folge der Wölbung der Membran reist der Stromkollektor bevorzugt entlang dieser Grenze.

### Ausbildung der Membran als Federelement

Zur Realisierung der erfindungsgemäßen Lösung kann die metallische Membran in einem besonders einfachen und eleganten Fall als Federelement ausgebildet sein, das bei Überschreitung des Schwellwerts aus einem ersten stabilen Zustand in einen zweiten stabilen oder metastabilen Zustand überführt wird.

Federelemente mit einem stabilen ersten und einem stabilen zweiten Zustand sind eine Ausführungsform eines bistabilen Systems. Federelemente mit einem stabilen ersten und einem metastabilen zweiten Zustand sind auch unter der Bezeichnung "Knackfrosch" bekannt.

Die Eignung, den ersten und den zweiten stabilen Zustand einnehmen zu können, kann bevorzugt durch eine entsprechende Prägung des Federelements herbeigeführt werden. Der zweite Zustand ist stabil, wenn das Federelement auch dann im zweiten Zustand verbleibt, wenn der Druck innerhalb des Gehäuses wieder auf einen Wert unterhalb des Druckschwellwerts absinkt. Metastabil bedeutet dagegen, dass der zweite Zustand automatisch zu Gunsten des ersten Zustands aufgegeben wird, sobald der Druck wieder unter den Druckschwellwert fällt.

Bei Verwendung eines Kontaktelements, das eine als Federelement ausgebildete Membran umfasst oder als eine solche ausgebildet ist, kann es bei Überschreitung des Schwellwerts zu einem abrupten Übergang in den zweiten stabilen oder metastabilen Zustand kommen, wobei es zu dem Abriss des einen der ersten Längsränder von dem Kontaktelement kommt.

Wenn das Kontaktelement eine als Federelement ausgebildete Membran umfasst, so ist es bevorzugt, dass die Schweißverbindung zwischen dem einen der ersten Längsränder und dem Kontaktelement ausschließlich zwischen dem einen der ersten Längsränder und der Membran besteht. Wenn das Kontaktelement als Federelement ausgebildet ist, so ist es bevorzugt, dass die Schweißverbindung zwischen dem einen der ersten Längsränder und dem Kontaktelement ausschließlich in einem zentralen Bereich des Kontaktelements besteht, der von der Wölbung betroffen ist.

Im Folgenden werden einige besonders bevorzugte Ausführungsformen des Kontaktelements und deren Einsatz in besonders bevorzugten Erfindungsvarianten beschrieben.

### Bevorzugte Ausführungsformen des Kontaktelements / Elektrische Anbindung des Kontaktelements an den als Wickel ausgebildeten Elektroden-Separator-Verbund

In einer **ersten bevorzugten Erfindungsvariante** zeichnet sich die Energiespeicherzelle durch mindestens eines der vier unmittelbar folgenden Merkmale a. bis d. aus:
a. Das Kontaktelement umfasst als Membran eine Metallscheibe sowie weiterhin einen Poldeckel, die jeweils einen kreisförmigen Umfang aufweisen.
b. Die Metallscheibe steht in unmittelbarem Kontakt mit dem einen der ersten Längsränder und ist mit diesem Längsrand durch Verschweißung verbunden.
c. Die Metallscheibe und der Poldeckel schließen einen Zwischenraum ein, in den sich die Metallscheibe bei Überschreitung des Schwellwerts wölbt.
d. In dem Zwischenraum ist mindestens ein Distanzelement angeordnet, das eine Wölbung in den Zwischenraum unterhalb des Schwellwerts unterbindet und das bei Überschreiten des Schwellwerts kollabiert und/oder komprimiert wird.

Bevorzugt sind die unmittelbar vorstehenden Merkmale a. und b. in Kombination realisiert. Besonders bevorzugt sind die unmittelbar vorstehenden Merkmale a. bis d. in Kombination realisiert.

Das Kontaktelement kann aus mehreren Einzelteilen, darunter die Metallscheibe, bestehen, die nicht zwingend alle aus Metall bestehen müssen. In einer besonders bevorzugten Ausführungsform kann das Kontaktelement beispielsweise einen metallischen Poldeckel mit kreisförmigem Umfang umfassen, der auf die Metallscheibe aufgeschweißt sein kann und näherungsweise oder exakt den gleichen Durchmesser wie die Metallscheibe aufweist, so dass der Rand der Metallscheibe und der Rand des Poldeckels gemeinsam den Rand des Kontaktelements bilden. In einer weiteren Ausführungsform kann der Rand des Poldeckels durch einen radial nach innen umgebogenen Rand der Metallscheibe umschlossen werden. In bevorzugten Ausführungsformen kann sogar eine Klemmverbindung zwischen den beiden Einzelteilen bestehen.

Der Zwischenraum ist bei erfindungsgemäßen Zellen bevorzugt nicht gegenüber der Umgebung der Zelle abgeschlossen. In der Regel umfasst der Poldeckel mindestens eine Durchbrechung, durch die ein Druckausgleich mit der Umgebung der Zelle erfolgen kann. Dadurch baut sich in dem Zwischenraum auch kein Gegendruck auf, wenn sich die Membran in den Zwischenraum wölbt.

Um zu verhindern, dass sich die Metallscheibe bei einem Druck unterhalb des Schwellwerts bereits wölbt, ist gemäß der ersten bevorzugten Erfindungsvariante das Distanzelement vorgesehen. Dieses stößt bevorzugt mit einem Ende an die Metallscheibe und mit einem anderen Ende an den Poldeckel und verhindert eine frühzeitige Wölbung der Membran in den Innenraum hinein. Erfindungsgemäß wird es an den jeweils gewünschten Schwellwert angepasst. So kann als Distanzelement beispielsweise ein Kunststoffteil oder ein Metallteil verwendet werden, das bei einem definierten Druck zerbricht oder plastisch verformt wird.

In einer Weiterbildung der ersten bevorzugten Erfindungsvariante zeichnet sich die Zelle durch mindestens eines der drei unmittelbar folgenden Merkmale a. bis c. aus:
a. Die Metallscheibe weist auf einer ihrer Seiten mindestens eine rinnenförmige und/oder punktförmige Vertiefung auf, die auf ihrer anderen Seite als mindestens eine linienförmige und/oder punktförmige Erhöhung hervortritt.
b. Die Seite mit der mindestens einen Erhöhung steht in unmittelbarem Kontakt mit dem einen der ersten Längsränder.
c. Die mindestens eine Erhöhung und der eine der ersten Längsränder sind über mindestens einen Schweißpunkt und/oder mindestens eine Schweißnaht verbunden.

Besonders bevorzugt sind die unmittelbar vorstehenden Merkmale a. bis c. in Kombination realisiert.

Bei der Wölbung der Metallscheibe sollte die Verbindung zu dem daran gekoppelten Längsrand möglichst vollständig und zuverlässig getrennt werden. Überraschenderweise hat sich herausgestellt, dass eine zuverlässige Trennung insbesondere bei Anwesenheit der rinnenförmigen und/oder punktförmigen Vertiefung bei gleichzeitiger Verschweißung des Längsrands mit der mindestens einen Erhöhung möglich ist. Besonders bevorzugt werden mehrere Sicken als längliche Vertiefungen eingebracht.

Um zu gewährleisten, dass eine Wölbung der Metallscheibe erfolgen kann, sollte die Metallscheibe nicht zu dick ausgebildet sein. In aller Regel genügen beispielsweise bei einer Zelle mit dem Formfaktor 21 x 70 Metallscheiben mit einer Dicke im Bereich von 0,2 bis 0,4 mm den Anforderungen. Bei größeren Zellen sollten gegebenenfalls Metallscheiben mit höherer Wandstärke verwendet werden. Bei kleineren Zellen sollte die Wandstärke gegebenenfalls abgesenkt werden.

In einer bevorzugten Weiterbildung der Metallscheibe der erfindungsgemäßen Zelle ist diese durch mindestens eines der beiden folgenden Merkmale a. und b. gekennzeichnet:
a. Die Metallscheibe weist auf einer ihrer Seiten mehrere rinnenförmige Vertiefungen in vorzugsweise sternförmige Anordnung auf, die auf ihrer anderen Seite als linienförmige Erhöhungen hervortreten.
b. Die Metallscheibe umfasst in jeder der rinnenförmigen Vertiefungen mindestens eine Schweißnaht, vorzugsweise zwei parallele Schweißnähte, in Folge einer Verschweißung der Metallscheibe mit dem einen der ersten Längsränder.

Besonders bevorzugt sind die unmittelbar vorstehenden Merkmale a. und b. in Kombination realisiert.

Durch die sternförmige Anordnung sowie die Doppelschweißnaht ist eine gute und vor allem gleichmäßige Anbindung der Metallscheibe an den einen der ersten Längsränder gewährleistet.

Über die Ausgestaltung der Verschweißung, insbesondere die Anzahl, Größe und Positionierung der Schweißnähte) lassen sich der Druckschwellwert und die Dekontaktierungsgeschwindigkeit im Fall einer Wölbung der Membran einstellen.

In einer besonders bevorzugten Weiterbildung der ersten bevorzugten Erfindungsvariante zeichnet sich die Zelle durch mindestens eines der sechs unmittelbar folgenden Merkmale a. bis f. aus:
a. Das Kontaktelement umfasst neben der Metallscheibe ein Kontaktblech.
b. Das Kontaktblech steht in unmittelbarem Kontakt mit dem einen der ersten Längsränder und ist mit diesem Längsrand durch Verschweißung verbunden.
c. Das Kontaktblech ist sternförmig ausgebildet und umfasst ein Zentrum sowie mindestens drei streifenförmige Fortsätze in sternförmiger Anordnung.
d. Die Metallscheibe weist zusätzlich zu den rinnenförmigen Vertiefungen auf einer ihrer Seiten eine sternförmige Vertiefung auf, in welcher das Kontaktblech positioniert ist.
e. Zwischen der Metallscheibe und dem Kontaktblech ist mindestens ein Isoliermittel angeordnet, das die streifenförmigen Fortsätze von der Metallscheibe isoliert.
f. Die Metallscheibe und das Zentrum des Kontaktblechs sind mittels Verschweißung verbunden.

Bevorzugt sind die unmittelbar vorstehenden Merkmale a. und b. mit den Merkmalen e. und f. realisiert. Besonders bevorzugt sind alle unmittelbar vorstehenden Merkmale a. bis f. in Kombination realisiert.

Diese Ausführungsform gewährleistet durch das zusätzliche Kontaktblech eine nahezu optimale Elektrodenanbindung, ohne dass dies mit einer geringeren Energiedichte erkauft werden muss, da die erfindungsgemäße Lösung eine besonders platzsparende Anordnung von Metallscheibe und Kontaktblech ermöglicht, da die sternförmige Vertiefung in der Metallscheibe das Kontaktblech aufnehmen kann.

In einigen Ausführungsformen kann das Kontaktblech wie die Metallscheibe mindestens eine rinnenförmige und/oder punktförmige Vertiefung aufweisen. Bevorzugt ist das Kontaktblech jedoch flach ausgebildet und weist keine rinnen- und/oder punktförmige Vertiefungen oder Erhebungen auf.

Die Verschweißung der Metallscheibe mit dem Zentrum des Kontaktblechs erfolgt bevorzugt lediglich mittels eines Schweißpunkts. Dies erleichtert im Falle einer Wölbung der Membran die Dekontaktierung.

In Ausführungsformen, in denen die unmittelbar vorstehenden Merkmale a. und b. mit den Merkmalen e. und f. realisiert sind, muss das Kontaktblech nicht zwingend sternförmig ausgebildet sein. Es kann beispielsweise auch kreisförmig, also als Scheibe, oder polygonal ausgebildet sein.

In einer **zweiten bevorzugten Erfindungsvariante** zeichnet sich die Energiespeicherzelle durch mindestens eines der fünf unmittelbar folgenden Merkmale a. bis e. aus:
a. Das Kontaktelement umfasst als Membran eine Metallscheibe sowie weiterhin einen Poldeckel, die jeweils einen kreisförmigen Umfang aufweisen.
b. Das Kontaktelement umfasst ein Kontaktblech, das in unmittelbarem Kontakt mit dem einen der ersten Längsränder steht und mit diesem Längsrand durch Verschweißung verbunden ist.
c. Die Metallscheibe und der Poldeckel schließen einen Zwischenraum ein, in den sich die Metallscheibe bei Überschreitung des Schwellwerts wölbt.
d. In dem Zwischenraum ist mindestens ein Distanzelement angeordnet, das eine Wölbung in den Zwischenraum unterhalb des Schwellwerts unterbindet und das bei Überschreiten des Schwellwerts kollabiert und/oder komprimiert wird.
e. Die Metallscheibe und das Kontaktblech sind mittels Verschweißung unmittelbar miteinander verbunden.

Besonders bevorzugt sind die unmittelbar vorstehenden Merkmale a. bis e. in Kombination realisiert.

Im Unterschied zur ersten bevorzugten Erfindungsvariante besteht hier keine unmittelbare Verbindung zwischen der Metallscheibe und dem einen der ersten Längsränder. Diese besteht nur zwischen dem Kontaktblech und dem einen der ersten Längsränder.

Die sonstigen Bestandteile des Kontaktelements sowie das Distanzelement können in bevorzugten Ausführungsformen weitergebildet sein, wie es im Zusammenhang mit der ersten bevorzugten Erfindungsvariante beschrieben wurde.

In einer **dritten bevorzugten Erfindungsvariante** zeichnet sich die Energiespeicherzelle durch mindestens eines der fünf unmittelbar folgenden Merkmale a. bis e. aus:
a. Das Kontaktelement umfasst eine Metallscheibe, die einen kreisförmigen Umfang aufweist, sowie ein Kontaktblech.
b. Das Kontaktblech steht in unmittelbarem Kontakt mit dem einen der ersten Längsränder und ist mit diesem Längsrand durch Verschweißung verbunden.
c. Die Metallscheibe und das Kontaktblech sind durch mindestens einen elektrisch isolierenden Distanzhalter voneinander getrennt.
d. Die Metallscheibe umfasst die metallische Membran oder ist bereichsweise als die Membran ausgebildet.
e. Die Membran steht bis zu einer Überschreitung des Schwellwerts in elektrischem Kontakt, bevorzugt in unmittelbarem Kontakt, mit dem Kontaktblech.

Besonders bevorzugt sind die unmittelbar vorstehenden Merkmale a. bis e. in Kombination realisiert.

Die Metallscheibe des Kontaktelements muss nicht zwingend ein separates Bauteil sein. Beispielsweise kann auch der Boden eines Gehäusebechers als Metallscheibe eines Kontaktelements dienen. Gemäß der dritten Erfindungsvariante lässt sich die CID-Membran beispielsweise in den Boden eines Gehäusebechers integrieren. Steigt der Druck in der Zelle über den Schwellwert, so wölbt sich die Membran nach außen und die elektrische Verbindung zum Elektrodenverbund wird getrennt. Der Distanzhalter aus elektrisch isolierendem Material verhindert dabei einen elektrischen Kontakt der Metallscheibe mit dem Kontaktblech. Bei dem Distanzhalter kann es sich beispielsweise um einen Kunststoffring handeln.

Die Membran kann mit dem Kontaktblech verschweißt sein, insbesondere über einen oder mehrere Schweißpunkte. Das muss aber nicht zwingend so sein, etwa wenn die Membran und das Kontaktblech über Federkraft kontaktiert sind.

In einer Weiterbildung der dritten bevorzugten Erfindungsvariante zeichnet sich die Zelle durch das unmittelbar folgende Merkmal a. aus:
a. Die Membran ist als Federelement ausgebildet, das bei Überschreitung des Schwellwerts aus einem ersten stabilen Zustand in einen zweiten stabilen oder metastabilen Zustand überführt wird.

Was erfindungsgemäß unter einem Federelement zu verstehen ist, wurde oben bereits definiert.

Grundsätzlich ist es möglich, dass das Kontaktelement wie im Fall der ersten bevorzugten Erfindungsvariante gleichfalls einen Poldeckel umfasst. Entsprechend zeichnet sich die Zelle in einer möglichen Weiterbildung der dritten bevorzugten Erfindungsvariante durch mindestens eines der unmittelbar folgenden Merkmale a. und b. aus:
a. Das Kontaktelement umfasst zusätzlich zu der Metallscheibe einen Poldeckel, der einen kreisförmigen Umfang aufweist.
b. Die Metallscheibe und der Poldeckel schließen einen Zwischenraum ein, in den sich die Membran bei Überschreitung des Schwellwerts wölbt.

Die Metallscheibe und der Poldeckel sind dabei in bevorzugten Ausführungsformen ausgebildet, wie es im Zusammenhang mit der ersten bevorzugten Erfindungsvariante beschrieben wurde.

### Verschlussvarianten

Grundsätzlich ist es möglich, das Kontaktelement mit oder ohne Dichtung in die endständige kreisförmige Öffnung des rohrförmig ausgebildeten Gehäuseteils einzusetzen, um diese zu verschließen. Entsprechend ist es in einer ersten bevorzugten Verschlussvariante bevorzugt, dass
a. die Zelle eine ringförmige Dichtung aus einem elektrisch isolierenden Material umfasst, die den kreisförmigen Rand des Kontaktelements umschließt und
b. das Kontaktelement derart in dem rohrförmig ausgebildeten Gehäuseteil angeordnet ist, dass die ringförmige Dichtung entlang einer umlaufenden Kontaktzone an der Innenseite des rohrförmig ausgebildeten Gehäuseteils anliegt und das Kontaktelement mit der Dichtung die endständige kreisförmige Öffnung des rohrförmig ausgebildeten Gehäuseteils verschließt.

In einer zweiten Verschlussvariante ist es bevorzugt, dass
a. das Kontaktelement derart in dem rohrförmig ausgebildeten Gehäuseteil angeordnet ist, dass sein Rand entlang einer umlaufenden Kontaktzone an der Innenseite des rohrförmig ausgebildeten Gehäuseteils anliegt, und
b. der Rand des Kontaktelements mit dem rohrförmig ausgebildeten Gehäuseteil über eine umlaufende Schweißnaht verbunden ist.

Damit die ringförmige Dichtung bzw. der Rand des Kontaktelements an der Innenseite entlang der umlaufenden Kontaktzone anliegen kann, ist es bevorzugt, dass das rohrförmige Gehäuseteilzumindest in dem Abschnitt, in dem die Dichtung anliegt, einen kreisförmigen Querschnitt aufweist. Zweckmäßigerweise ist dieser Abschnitt hierfür hohlzylindrisch ausgebildet. Der Innendurchmesser des rohrförmigen Gehäuseteils ist in diesem Abschnitt entsprechend an den Außendurchmesser des Randes des Kontaktelements, insbesondere an den Außendurchmesser der Metallscheibe mit der darauf aufgezogenen Dichtung, angepasst.

Der Verschluss der Zelle kann im Falle des Kontaktelements mit der auf den Rand aufgezogenen Dichtung durch einen Bördel- oder einen Crimpvorgang erfolgen, wobei die Dichtung komprimiert wird.

Bei der Dichtung selbst kann es sich um eine übliche Kunststoffdichtung handeln, die chemisch beständig gegenüber den jeweils verwendeten Elektrolyten sein sollte. Dem Fachmann sind geeignete Dichtungsmaterialien bekannt.

Die erste Verschlussvariante führt dazu, dass das Kontaktelement gegenüber dem rohrförmig ausgebildeten Gehäuseteil elektrisch isoliert ist. Es bildet einen elektrischen Pol der Zelle. Bei einem Verschluss gemäß der zweiten Verschlussvariante besitzen das rohrförmig ausgebildete Gehäuseteil und das Kontaktelement die gleiche Polarität.

Die Bildung der Schweißnaht gemäß der zweiten Verschlussvariante erfolgt bevorzugt durch Verschweißung des Randes des Kontaktelements mit dem rohrförmig ausgebildeten Gehäuseteil mittels eines Lasers. Alternativ ist es grundsätzlich aber auch möglich, die Metallscheibe durch Verlötung oder Verklebung zu fixieren. Im letzteren Fall ist es denkbar, dass das Kontaktelement - wie bei Verwendung einer Dichtung - gegenüber dem rohrförmig ausgebildeten Gehäuseteil elektrisch isoliert ist.

### Verschweißung des Kontaktelements mit dem einen der ersten Längsränder

Das Konzept der Verschweißung der Ränder von Stromkollektoren mit Kontaktelementen ist bereits aus der WO 2017/215900 A1 oder aus der JP 2004-119330 A bekannt. Diese Technologie ermöglicht besonders hohe Strombelastbarkeiten und einen geringen Innenwiderstand. Bezüglich Verfahren zur elektrischen Verbindung von Kontaktelementen, insbesondere auch von scheibenförmigen Kontaktelementen, mit den Rändern von Stromkollektoren wird daher auf den Inhalt der WO 2017/215900 A1 und der JP 2004-119330 A vollumfänglich Bezug genommen.

Vorliegend ergibt sich in Folge des Kontakts des einen der ersten Längsränder mit dem Kontaktelement oder einer Komponente des Kontaktelements eine linienartige Kontaktzone, die im Falle der spiralförmig aufgewickelten Elektroden einen spiralförmigen Verlauf aufweist. Entlang dieser linien- und bevorzugt spiralförmigen Kontaktzone oder quer dazu kann mittels geeigneter Schweißverbindungen eine möglichst gleichmäßige Anbindung des Längsrands an das Kontaktelement oder an die Komponente des Kontaktelements realisiert werden.

### Gehäusevariante mit Gehäusebecher

In einer besonders bevorzugten Ausführungsform der Erfindung zeichnet sich die Energiespeicherzelle durch mindestens eines der unmittelbar folgenden zusätzlichen Merkmale a. und b. aus:
a. Das rohrförmig ausgebildete Gehäuseteil ist Bestandteil eines Gehäusebechers, der einen kreisförmigen Boden umfasst.
b. Der andere der ersten Längsränder liegt unmittelbar an dem Boden an und ist mit dem Boden bevorzugt durch Verschweißung verbunden.

Besonders bevorzugt sind die unmittelbar vorstehenden Merkmale a. und b. in Kombination realisiert.

Diese Variante eignet sich vor allem für Zellen gemäß obiger erster Verschlussvariante. Kommt die zweite Verschlussvariante zum Einsatz, wird, außer im Fall der erwähnten Verklebung, eine Poldurchführung benötigt.

Die Verwendung von Gehäusebechern ist beim Bau von Zellgehäusen seit langem bekannt, so etwa aus der eingangs erwähnten WO 2017/215900 A1. Nicht bekannt ist hingegen die unmittelbare Anbindung der Längsränder eines Stromkollektors an den Boden eines Gehäusebechers, wie es hier vorgeschlagen wird.

Gemäß der vorliegenden Erfindung ist es also möglich und bevorzugt, die aus gegenüberliegenden Stirnseiten eines als Wickel ausgebildeten Elektroden-Separator-Verbunds austretenden Stromkollektorränder von positiver und negativer Elektrode jeweils unmittelbar an ein Gehäuseteil, nämlich den Boden des Bechers und das oben beschriebene, als Verschlusselement fungierende Kontaktelement, anzukoppeln. Die Nutzung des verfügbaren Innenvolumens des Zellgehäuses für aktive Komponenten nähert sich so ihrem theoretischen Optimum.

Die Ankopplung des anderen der ersten Längsränder an den Boden oder an das Kontaktblech folgt grundsätzlich den gleichen konstruktiven Prinzipien wie im Fall der Ankopplung des einen der ersten Längsränder an das Kontaktelement. Hier liegt der Längsrand am Boden oder an dem Kontaktblech an, so dass sich gleichfalls eine linienartige Kontaktzone ergibt, die im Falle der spiralförmig aufgewickelten Elektroden einen spiralförmigen Verlauf aufweist. Entlang dieser linien- und bevorzugt spiralförmigen Kontaktzone oder quer dazu kann mittels geeigneter Schweißverbindungen eine möglichst gleichmäßige Anbindung des Längsrands an den Boden realisiert werden.

### Gehäusevariante mit zwei Deckeln

In einer weiteren besonders bevorzugten Ausführungsform der Erfindung zeichnet sich die Energiespeicherzelle durch mindestens eines der drei unmittelbar folgenden zusätzlichen Merkmale a. bis c. aus:
a. Das rohrförmig ausgebildete Gehäuseteil weist eine weitere endständige kreisförmige Öffnung auf.
b. Die Zelle umfasst ein Verschlusselement mit einem kreisförmigen Rand, das diese weitere endständige Öffnung verschließt.
c. Das Verschlusselement für die weitere endständige Öffnung ist oder umfasst eine Metallscheibe, deren Rand dem kreisförmigen Rand des metallischen Verschlusselements entspricht oder diesen mitbildet.

Besonders bevorzugt sind die unmittelbar vorstehenden Merkmale a. bis c. in Kombination realisiert.

In dieser Ausführungsform ersetzt das rohrförmig ausgebildete Gehäuseteil gemeinsam mit einem Verschlusselement einen Gehäusebecher. Das Gehäuse setzt sich also aus drei Gehäuseteilen zusammen, von denen eines rohrförmig ausgebildet ist und die anderen beiden (das Kontaktelement und das Verschlusselement) die endständigen Öffnungen des rohrförmigen Teils als Deckel verschließen. Produktionstechnisch bietet dies Vorteile, da für die Herstellung rohrförmiger Gehäuseteile, anders als bei Gehäusebechern, keine Tiefziehwerkzeuge benötigt werden. Daneben resultieren bei einer unmittelbaren Anbindung des anderen der ersten Längsränder an das Verschlusselement grundsätzlich die gleichen Vorteile wie bei der oben beschriebenen Anbindung an den Boden eines Gehäusebechers.

Das rohrförmig ausgebildete Gehäuseteil ist in dieser Ausführungsform bevorzugt zylindrisch bzw. hohlzylindrisch ausgebildet. Bei dem Verschlusselement handelt es sich in der einfachsten Ausführungsform um eine Metallscheibe mit kreisförmigem Umfang. Weiter bevorzugt kann die Metallscheibe des Verschlusselements ausgebildet sein wie die Metallscheibe des Kontaktelements.

In einigen bevorzugten Ausführungsformen kann das Verschlusselement, insbesondere die Metallscheibe, einen Rand aufweisen, der radial nach innen umgebogen ist, so dass es oder sie einen doppellagigen Randbereich mit beispielsweise U-förmigem Querschnitt aufweist.

In einer weiteren Ausführungsform kann das Verschlusselement, insbesondere die Metallscheibe, auch einen Rand aufweisen, der um 90° umgebogen ist, so dass er einen L-förmigen Querschnitt aufweist.

In einer Weiterbildung dieser besonders bevorzugten Ausführungsformen zeichnet sich die Energiespeicherzelle durch mindestens eines der unmittelbar folgenden Merkmale a. bis c. aus:
a. Die Metallscheibe des Verschlusselements oder die das Verschlusselement bildende Metallscheibe ist derart in dem rohrförmig ausgebildeten Gehäuseteil angeordnet, dass ihr Rand entlang einer umlaufenden Kontaktzone an der Innenseite des rohrförmig ausgebildeten Gehäuseteils anliegt.
b. Der Rand der Metallscheibe ist mit dem rohrförmig ausgebildeten Gehäuseteil über eine umlaufende Schweißnaht verbunden.
c. Das rohrförmig ausgebildete Gehäuseteil umfasst einen kreisförmigen Rand, der radial nach innen über den Rand des Verschlusselements, insbesondere den Rand der Metallscheibe, umgebogen ist.

Besonders bevorzugt sind die unmittelbar vorstehenden Merkmale a. und b., gegebenenfalls auch die unmittelbar vorstehenden Merkmale a. bis c., in Kombination realisiert.

Gemäß dieser Weiterbildung ist es also bevorzugt, das Verschlusselement durch Verschweißung in der weiteren endständigen Öffnung zu fixieren. Ein separates Dichtelement wird bei einer umlaufenden Schweißnaht auch hier nicht benötigt.

Diese Weiterbildung ist dann besonders bevorzugt, wenn die Zelle gemäß der oben beschriebenen ersten Verschlussvariante verschlossen wurde.

Das radiale Umbiegen des Randes des Verschlusselements ist eine fakultative Maßnahme, die zum Fixieren des Verschlusselements nicht benötigt wird, ungeachtet dessen aber zweckmäßig sein kann.

In einer Weiterbildung zeichnet sich die Energiespeicherzelle durch eines der unmittelbar folgenden Merkmale a. oder b. aus:
a. Der andere der ersten Längsränder liegt unmittelbar an der Metallscheibe des Verschlusselements oder an der das Verschlusselement bildenden Metallscheibe an und ist mit der Metallscheibe bevorzugt durch Verschweißung verbunden.
b. Der andere der ersten Längsränder ist an ein Kontaktblech geschweißt, das unmittelbar an der Metallscheibe anliegt.

Grundsätzlich ist es auch hier möglich, dass - wie im Falle des Kontaktelements, zwischen dem Längsrand des anderen der ersten Längsränder und der Metallscheibe bzw. dem Verschlusselement lediglich eine mittelbare Verbindung über ein Kontaktblech besteht. In diesem Fall besteht zwischen dem Kontaktblech und dem Verschlusselement, insbesondere der Metallscheibe des Verschlusselements, bevorzugt eine direkte Verbindung durch unmittelbare Verschweißung. Das Kontaktblech kann dabei wie sein Pendant im Falle des oben beschriebenen Kontaktelements ausgestaltet sein.

Die Ankopplung des anderen der ersten Längsränder an die Metallscheibe oder an das Kontaktblech des Verschlusselements folgt auch hier den grundsätzlich gleichen konstruktiven Prinzipien wie im Fall der Ankopplung des einen der ersten Längsränder an das Kontaktelement. Der Längsrand liegt an der Metallscheibe oder an dem Kontaktblech an, so dass sich eine linienartige Kontaktzone ergibt, die im Falle der spiralförmig aufgewickelten Elektroden einen spiralförmigen Verlauf aufweist. Entlang dieser linien- und bevorzugt spiralförmigen Kontaktzone oder quer dazu kann mittels geeigneter Schweißverbindungen eine möglichst gleichmäßige Anbindung des Längsrands an die Metallscheibe oder an das Kontaktblech des Verschlusselements realisiert werden.

### Gehäusematerialien

Insbesondere wenn die erfindungsgemäße Zelle als Lithium-Ionen-Zelle ausgestaltet ist, hängt die Wahl des Materials, aus dem der Gehäusebecher, die Metallscheibe und/oder das Kontaktblech und das Verschlusselement bzw. dessen oder deren Komponenten gefertigt werden, davon ab, ob der Anoden- oder der Kathodenstromkollektor an das jeweilige Gehäuseteil angebunden ist. Bevorzugt sind grundsätzlich die gleichen Materialien, aus denen die Stromkollektoren selbst gefertigt werden. Die genannten Gehäuseteile können also beispielsweise aus den folgenden Materialien bestehen:
Legiertes oder unlegiertes Aluminium, legiertes oder unlegiertes Titan, legiertes oder unlegiertes Nickel, legiertes oder unlegiertes Kupfer, Edelstahl (beispielsweise vom Typ 1.4303 oder 1.4404), vernickelter Stahl.

Weiterhin können das Gehäuse und dessen Komponenten aus mehrschichtigen Materialien (engl.: Clad Materials) bestehen, beispielsweise eine Schicht aus einem Stahl und eine Schicht aus Aluminium oder Kupfer umfassen. Die Schicht aus Aluminium oder die Schicht aus Kupfer bildet in diesen Fällen beispielsweise die Innenseite des Gehäusebechers bzw. des Bodens des Gehäusebechers.

Weitere geeignete Materialien sind dem Fachmann bekannt.

### Bevorzugte Ausgestaltungen der Elektroden

In den freien Randstreifen ist das Metall des jeweiligen Stromkollektors bevorzugt frei von dem jeweiligen Elektrodenmaterial. In einigen bevorzugten Ausführungsformen ist das Metall des jeweiligen Stromkollektors dort unbedeckt, so dass es für elektrische Kontaktierungen, beispielsweise durch die oben genannten Verschweißungen mit dem Kontakt- oder dem Verschlusselement, zur Verfügung steht.

In einigen weiteren Ausführungsformen kann das Metall desjeweiligen Stromkollektors in den freien Randstreifen aber auch zumindest bereichsweise mit einem Stützmaterial beschichtet sein, das thermisch beständiger als der damit beschichtete Stromkollektor ist und das sich von dem auf dem jeweiligen Stromkollektor angeordneten Elektrodenmaterial unterscheidet.

"Thermisch beständiger" soll hierbei bedeuten, dass das Stützmaterial bei einer Temperatur, bei der das Metall des Stromkollektors schmilzt, seinen festen Zustand behält. Es weist also entweder einen höheren Schmelzpunkt als das Metall auf oder aber es sublimiert oder zersetzt sich erst bei einer Temperatur, bei der das Metall bereits geschmolzen ist.

Das im Rahmen der vorliegenden Erfindung einsetzbare Stützmaterial kann grundsätzlich ein Metall oder eine Metalllegierung sein, sofern dieses oder diese einen höheren Schmelzpunkt aufweist als das Metall, aus dem die Oberfläche besteht, die mit dem Stützmaterial beschichtet ist. In vielen Ausführungsformen zeichnet sich die erfindungsgemäße Energiespeicherzelle allerdings bevorzugt durch mindestens eines der unmittelbar folgenden zusätzlichen Merkmale a. bis d. aus:
a. Bei dem Stützmaterial handelt es sich um ein nichtmetallisches Material.
b. Bei dem Stützmaterial handelt es sich um ein elektrisch isolierendes Material.
c. Bei dem nichtmetallischen Material handelt es sich um ein keramisches Material, ein glaskeramisches Material oder um ein Glas.
d. Bei dem keramischen Material handelt es sich um Aluminiumoxid (Al₂O₃), um Titanoxid (TiO₂), um Titannitrid (TiN), um Titanaluminiumnitrid (TiAlN), um ein Siliziumoxid, insbesondere Siliziumdioxid (SiO₂), oder um Titancarbonitrid (TiCN).

Erfindungsgemäß ist das Stützmaterial besonders bevorzugt gemäß dem unmittelbar vorstehenden Merkmal b. und insbesondere bevorzugt gemäß dem unmittelbar vorstehenden Merkmal d. ausgebildet.

Der Begriff nichtmetallisches Material umfasst insbesondere Kunststoffe, Gläser und keramische Materialien.

Der Begriff elektrisch isolierendes Material ist vorliegend breit auszulegen. Er umfasst grundsätzlich jedes elektrisch isolierende Material, insbesondere auch besagte Kunststoffe.

Der Begriff keramisches Material ist vorliegend breit auszulegen. Insbesondere sind hierunter Carbide, Nitride, Oxide, Silicide oder Mischungen und Derivate dieser Verbindungen zu verstehen.

Mit dem Begriff "glaskeramisches Material" ist insbesondere ein Material gemeint, das kristalline Teilchen umfasst, die in eine amorphe Glasphase eingebettet sind.

Der Begriff "Glas" meint grundsätzlich jedes anorganische Glas, das den oben definierten Kriterien an thermische Stabilität genügt und das gegenüber einem gegebenenfalls in der Zelle anwesenden Elektrolyten chemisch stabil ist.

Besonders bevorzugt besteht der Anodenstromkollektor aus Kupfer oder einer Kupferlegierung während gleichzeitig der Kathodenstromkollektor aus Aluminium oder einer Aluminiumlegierung besteht und das Stützmaterial Aluminiumoxid oder Titanoxid ist.

Es kann weiterhin bevorzugt sein, dass freie Randstreifen des Anoden- und/oder des Kathodenstromkollektors mit einem Streifen aus dem Stützmaterial beschichtet sind.

Die Hauptbereiche, insbesondere die streifenförmigen Hauptbereiche von Anodenstromkollektor und Kathodenstromkollektor, erstrecken sich bevorzugt parallel zu den jeweiligen Rändern oder Längsrändern der Stromkollektoren. Bevorzugt erstrecken sich die streifenförmigen Hauptbereiche über mindestens 90 %, besonders bevorzugt über mindestens 95 %, der Flächen von Anodenstromkollektor und Kathodenstromkollektor.

In einigen bevorzugten Ausführungsformen wird das Stützmaterial unmittelbar neben den bevorzugt streifenförmigen Hauptbereichen in Form eines Streifens oder einer Linie aufgebracht, bedeckt die freien Bereiche dabei jedoch nicht vollständig, so dass unmittelbar entlang des Längsrands das Metall des jeweiligen Stromkollektors frei liegt.

### Sonstige bevorzugte Ausgestaltungen der Energiespeicherzelle

Bei der erfindungsgemäßen Energiespeicherzelle kann es sich um eine Knopfzelle handeln. Knopfzellen sind zylindrisch ausgebildet und weisen eine Höhe auf, die geringer als ihr Durchmesser ist. Bevorzugt liegt die Höhe im Bereich von 4 mm bis 15 mm. Weiter ist es bevorzugt, dass die Knopfzelle einen Durchmesser im Bereich von 5 mm bis 25 mm aufweist. Knopfzellen eignen sich beispielsweise zur Versorgung von kleinen elektronischen Geräten wie Uhren, Hörgeräten und kabellosen Kopfhörern mit elektrischer Energie.

Die Nennkapazität einer als Lithium-Ionen-Zelle ausgebildeten erfindungsgemäßen Knopfzelle beträgt in der Regel bis zu 1500 mAh. Bevorzugt liegt die Nennkapazität im Bereich von 100 mAh bis 1000 mAh, besonders bevorzugt im Bereich von 100 bis 800 mAh.

Besonders bevorzugt ist die erfindungsgemäße Energiespeicherzelle jedoch eine zylindrische Rundzelle. Zylindrische Rundzellen weisen eine Höhe auf, die größer als ihr Durchmesser ist. Sie eignen sich insbesondere für die eingangs genannten Anwendungen mit hohem Energiebedarf, beispielsweise im Automobilbereich oder für E-Bikes oder für Elektrowerkzeuge.

Bevorzugt liegt die Höhe als Rundzelle ausgebildeter Energiespeicherzellen im Bereich von 15 mm bis 150 mm. Der Durchmesser der zylindrischen Rundzellen liegt bevorzugt im Bereich von 10 mm bis 60 mm. Innerhalb dieser Bereiche sind Formfaktoren von beispielsweise 18 x 65 (Durchmesser mal Höhe in mm) oder 21 x 70 (Durchmesser mal Höhe in mm) oder 32 x 700 (Durchmesser mal Höhe in mm) oder 32 x 900 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen.

Die Nennkapazität der als Lithium-Ionen-Zelle ausgebildeten erfindungsgemäßen zylindrischen Rundzelle beträgt bevorzugt bis zu 90000 mAh. Mit dem Formfaktor von 21 x 70 hat die Zelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Der Anodenstromkollektor, der Kathodenstromkollektor und der Separator sind in Ausführungsformen, bei denen die erfindungsgemäße Zelle eine zylindrische Rundzelle ist, bevorzugt bandförmig ausgebildet und weisen bevorzugt die folgenden Dimensionen auf:
- Eine Länge im Bereich von 0,5 m bis 25 m
- Eine Breite im Bereich 30 mm bis 145 mm

Der freie Randstreifen, der sich entlang des ersten Längsrands erstreckt und der nicht mit dem Elektrodenmaterial beladen ist, weist in diesen Fällen bevorzugt eine Breite von nicht mehr als 5000 µm auf.

Im Falle einer zylindrischen Rundzelle mit dem Formfaktor 18 x 65 weisen die Stromkollektoren bevorzugt
- eine Breite von 56 mm bis 62 mm, bevorzugt von 60 mm, und
- eine Länge von nicht mehr als 2 m, bevorzugt von nicht mehr als 1,5 m,
auf.

Im Falle einer zylindrischen Rundzelle mit dem Formfaktor 21 x 70 weisen die Stromkollektoren bevorzugt
- eine Breite von 56 mm bis 68 mm, bevorzugt von 65 mm, und
- eine Länge von nicht mehr als 3 m, bevorzugt von nicht mehr als 2,5 m,
auf.

In einer besonders bevorzugten Ausführungsform der Erfindung zeichnet sich die erfindungsgemäße Energiespeicherzelle durch das folgende zusätzliche Merkmal aus:
a. Das Kontaktelement umfasst ein Sicherheitsventil, über das bei Überschreiten eines weiteren Druckschwellwerts Druck aus dem Gehäuse entweichen kann.

Bei diesem Sicherheitsventil kann es sich beispielsweise um eine Berstmembran, ein Berstkreuz oder eine ähnliche Sollrissstelle handeln, die bei einem definierten Überdruck in der Zelle aufreißen kann, um eine Explosion der Zelle zu verhindern.

Besonders bevorzugt kann die Metallscheibe des Kontaktelements das Sicherheitsventil, insbesondere in Form einer Sollrissstelle, aufweisen.

### Prismatische Ausführungsform

Die Verwendung eines Kontaktelements, das zum einen zur Kontaktierung einer der Elektroden und gleichzeitig als Gehäuseteil dient sowie über eine CID-Funktionalität verfügt, ist nicht auf Energiespeicherzellen mit zylindrischen Gehäuse beschränkt. Vielmehr können auch Energiespeicherelemente, die einen von einem prismatischen Gehäuse umschlossenen Stapel umfassen, der aus zwei oder mehr identischen Elektroden-Separator-Verbünden gebildet ist, ein solches Kontaktelement umfassen.

Die Erfindung umfasst daher auch ein Energiespeicherelement mit den unmittelbar folgenden Merkmalen a. bis l.:
a. Das Energiespeicherelement umfasst mindestens zwei Elektroden-Separator-Verbünde mit der Sequenz Anode / Separator / Kathode.
b. Die Anoden der Verbünde sind bevorzugt rechteckig ausgebildet und umfassen jeweils einen Anodenstromkollektor mit einem Anodenstromkollektorrand.
c. Die Anodenstromkollektoren weisen jeweils einen Hauptbereich, der mit einer Schicht aus negativem Elektrodenmaterial beladen ist, sowie einen freien Randstreifen, der sich entlang des jeweiligen Anodenstromkollektorrands erstreckt und der nicht mit dem Elektrodenmaterial beladen ist, auf.
d. Die Kathoden der Verbünde sind bevorzugt rechteckig ausgebildet und umfassen jeweils einen Kathodenstromkollektor mit einem Kathodenstromkollektorrand.
e. Die Kathodenstromkollektoren weisen jeweils einen Hauptbereich, der mit einer Schicht aus positivem Elektrodenmaterial beladen ist, sowie einen freien Randstreifen, der sich entlang des jeweiligen Kathodenstromkollektorrands erstreckt und der nicht mit dem Elektrodenmaterial beladen ist, auf.
f. Die mindestens zwei Elektroden-Separator-Verbünde liegen aufeinander gestapelt vor, wobei der Stapel aus den Verbünden zwei endständigen Seiten aufweist.
g. Der Stapel aus den Elektroden-Separator-Verbünden ist von einem prismatischen Gehäuse umschlossen.
h. Die Anoden und die Kathoden sind derart ausgebildet und/oder zueinander angeordnet, dass die Anodenstromkollektorränder aus einer der endständigen Seiten und die Kathodenstromkollektorränder aus der anderen der endständigen Seiten austreten.
i. Das Energiespeicherelement weist ein metallisches Kontaktelement auf, das mit diesen Anodenstromkollektorrändern oder diesen Kathodenstromkollektorrändern in unmittelbarem Kontakt steht.
j. Das Kontaktelement ist mit den Rändern, mit denen es in unmittelbarem Kontakt steht, durch Verschweißung verbunden.
k. Das Kontaktelement dient als Teil des Gehäuses.
l. Das Kontaktelement umfasst eine metallische Membran, die elektrisch mit den Rändern, die mit dem Kontaktelement durch Verschweißung verbunden sind, verbunden ist und sich wölbt, wenn ein Druck in dem Gehäuse einen Schwellwert überschreitet, wobei der elektrische Kontakt zu diesen Rändern verloren geht.

Für das Kontaktelement und dessen Komponenten gelten die gleichen bevorzugten Weiterbildungen wie im Fall der erfindungsgemäßen Energiespeicherzelle.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch
- Fig. 1 eine Aufsicht schräg von vorne auf eine Schnittansicht eines Kontaktelements gemäß der Erfindung,
- Fig. 2 eine Teildarstellung des in Fig. 1 dargestellten Kontaktelements sowie eines daran fixierten Stromkollektorrands im Querschnitt,
- Fig. 3 eine Aufsicht auf eine Ausführungsform eines Kontaktblechs,
- Fig. 4 eine Aufsicht auf eine Ausführungsform einer Metallscheibe eines Kontaktelements,
- Fig. 5 eine Darstellung einer erfindungsgemäßen Energiespeicherzelle gemäß der oben beschriebenen dritten bevorzugten Erfindungsvariante (Querschnittsdarstellung).

### DETAILLIERTE BESCHREIBUNG DER AUSFÜHRUNGSBEISPIELE

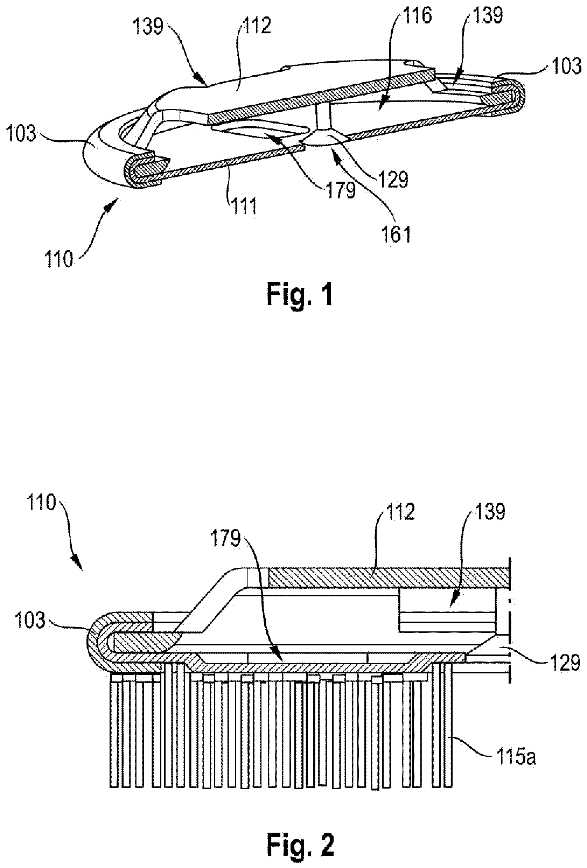

In **Fig. 1** und **Fig. 2** ist ein Kontaktelement 110 dargestellt, das die Metallscheibe 111, den metallischen Poldeckel 112, die Dichtung 103 und das Distanzelement 129 umfasst. Die Metallscheibe 111 und der Poldeckel 112 weisen jeweils einen kreisförmigem Umfang auf. Der Rand des Poldeckels 112 wird von dem radial nach innen umgebogenen Rand der Metallscheibe 111 umschlossen. Der Rand der Metallscheibe 111 und der Rand des Poldeckels 112 bilden gemeinsam den Rand des Kontaktelements 110. Auf den Rand des Kontaktelements ist die Dichtung 103 aufgezogen.

Das Distanzelement verschließt eine Öffnung 161, die zum Einfüllen von Elektrolyt in ein Zellgehäuse dienen kann. Um einen flüssigkeitsdichten Verschluss zu gewährleisten, kann das Distanzelement 129 hierzu mit der Metallscheibe 111 verschweißt oder verlötet sein.

Die Metallscheibe 111 und der Poldeckel 112 schließen den Zwischenraum 116 ein. In diesen Zwischenraum 116 kann sich die Metallscheibe 111 wölben, wenn ein Druck auf ihre Unterseite wirkt. In verbautem Zustand weist die Unterseite ins Innere des Zellgehäuses.

Der Zwischenraum 116 ist nicht geschlossen, stattdessen umfasst der Poldeckel 112 mindestens eine Durchbrechung 139, durch die ein Druckausgleich mit der Umgebung einer mit dem Kontaktelement 110 ausgestatteten Zelle erfolgen kann. Dadurch baut sich in dem Zwischenraum 116 auch kein Gegendruck auf, wenn sich die als Membran fungierende Metallscheibe 111 in den Zwischenraum 116 wölbt.

Um zu verhindern, dass sich die Metallscheibe 111 bei Drücken unterhalb des Schwellwerts bereits wölbt, ist das Distanzelement 129 vorgesehen. Dieses stößt bevorzugt mit einem seiner Enden an die Metallscheibe 111 und mit einem anderen Ende an den Poldeckel 112 und verhindert eine frühzeitige Wölbung der Membran in den Innenraum 116 hinein. Das Distanzelement 129 kann beispielsweise ein Kunststoffteil oder ein Metallteil sein, das bei einem definierten Druck auf die Membran zerbricht oder plastisch verformt wird.

Die Metallscheibe 111 weist eine rinnenförmige Vertiefung 179 in Form einer Sicke auf. Im Bereich dieser Sicke ist der Stromkollektorrand 115a angeschweißt.

Das in **Fig. 3** dargestellte Kontaktblech 113 ist sternförmig ausgebildet und umfasst ein Zentrum 113a sowie drei streifenförmige Fortsätze 113b in sternförmiger Anordnung. Entlang der Linien 113c auf den streifenförmigen Fortsätzen 113b kann das Kontaktblech 113 mit dem Rand eines Stromkollektors verschweißt werden. Das Kontaktblech kann beispielsweise aus einem Blech ausgestanzt werden und ist bevorzugt flach ausgebildet.

Die in **Fig. 4** dargestellte Metallscheibe 111 umfasst drei langgestreckte Sicken 111c, die die Kontaktierung mit dem Rand eines Stromkollektors verbessern sollen. Die Sicken 111c sind gleichfalls sternförmig angeordnet. Entlang der Linien innerhalb der Sicken 111c kann eine Verschweißung der Metallscheibe 111 mit dem Rand eines Stromkollektors erfolgen.

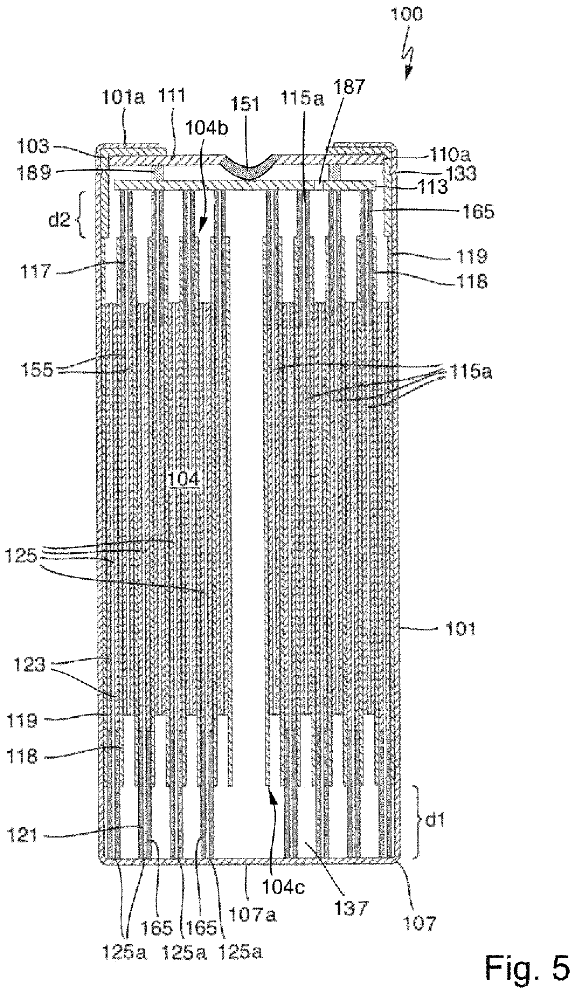

Die in **Fig. 5** dargestellte Energiespeicherzelle 100 umfasst ein hohlzylindrisch ausgebildetes Gehäuseteil 101, welches Bestandteil des Gehäusebechers 107 ist, der den kreisförmigen Boden 107a sowie eine kreisförmige Öffnung (definiert durch den Rand 101a) umfasst. Bei dem Gehäusebecher 107 handelt es sich um ein Tiefziehteil. Der Gehäusebecher 107 schließt gemeinsam mit dem Kontaktelement 110 einen Innenraum 137 ein, in dem der als Wickel ausgebildete Elektroden-Separator-Verbund 104 axial ausgerichtet ist. Das Kontaktelement 110 umfasst die Metallscheibe 111 mit kreisförmigem Rand sowie das Kontaktblech 113.

Der Elektroden-Separator-Verbund 104 liegt in Form eines zylindrischen Wickels mit zwei endständigen Stirnseiten vor, zwischen denen sich der umlaufende Wickelmantel erstreckt, der an der Innenseite des hohlzylindrisch ausgebildeten Gehäuseteils 101 anliegt. Er ist aus einer positiven Elektrode und einer negativen Elektrode sowie den Separatoren 118 und 119 gebildet, die jeweils bandförmig ausgebildet und spiralförmig gewickelt sind.

Die zwei Stirnseiten 104b und 104c des Elektroden-Separator-Verbunds 104 werden durch die Längsränder der Separatoren 118 und 119 gebildet. Aus diesen Stirnseiten ragen die Stromkollektoren 115 und 125 hervor. Die entsprechenden Überstände sind mit d1 und d2 bezeichnet. Um zu gewährleisten, dass die Stromkollektoren 115 und 125 aus den Stirnseiten 104b und 104c herausragen können, sind die bandförmige Anode und die bandförmige Kathode innerhalb des Elektroden-Separator-Verbunds 104 versetzt zueinander angeordnet.

Aus der oberen Stirnseite 104b des Elektroden-Separator-Verbunds 104 tritt der Anodenstromkollektor 115 aus, aus der unteren Stirnseite 104c der Kathodenstromkollektor 125. Der Anodenstromkollektor 115 ist in einem streifenförmigen Hauptbereich mit einer Schicht aus einem negativen Elektrodenmaterial 155 beladen. Der Kathodenstromkollektor 125 ist in einem streifenförmigen Hauptbereich mit einer Schicht aus einem positiven Elektrodenmaterial 123 beladen. Der Anodenstromkollektor 115 weist einen Randstreifen 117 auf, der sich entlang seines Längsrands 115a erstreckt und der nicht mit dem Elektrodenmaterial 155 beladen ist. Stattdessen ist hier eine Beschichtung 165 aus einem keramischen Stützmaterial aufgebracht, die den Stromkollektor in diesem Bereich stabilisiert. Der Kathodenstromkollektor 125 weist einen Randstreifen 121 auf, der sich entlang seines Längsrands 125a erstreckt und der nicht mit dem Elektrodenmaterial 123 beladen ist. Stattdessen ist auch hier die Beschichtung 165 aus dem keramischen Stützmaterial aufgebracht.

Der Rand 115a des Anodenstromkollektors 115 steht über seine gesamte Länge in unmittelbarem Kontakt mit dem Kontaktblech 113 und ist mit diesem durch Verschweißung verbunden. Das Kontaktelement 110 dient somit gleichzeitig zur elektrischen Kontaktierung der Anode und als Gehäuseteil.

Der Rand 125a des Kathodenstromkollektors 125 steht über seine gesamte Länge in unmittelbarem Kontakt mit dem Boden 107a und ist mit diesem durch Verschweißung verbunden. Der Boden 107a dient somit nicht nur als Teil des Gehäuses sondern auch zur elektrischen Kontaktierung der Kathode.

Die Gehäuseteile 101 und 110 sind durch die Dichtung 103 elektrisch voneinander isoliert. Der Rand 101a des Gehäuseteils 101 ist radial nach innen über den von der Dichtung 103 umschlossenen Rand der Metallscheibe 111 umgebogen und fixiert diese in der kreisförmigen Öffnung des rohrförmig ausgebildeten Gehäuseteils 101. Das rohrförmig ausgebildete Gehäuseteil 101 umfasst in axialer Richtung einen Abschnitt, in dem der umlaufende Wickelmantel 104a an seiner Innenseite anliegt, sowie einen Kontaktabschnitt, in dem die ringförmige Dichtung 103 an seiner Innenseite anliegt. Die ringförmige Dichtung 103 liegt in dem Kontaktabschnitt als Folge eines Pressdrucks, der von dem Rand 110a des Kontaktelements 110 und der Innenseite des rohrförmig ausgebildeten Gehäuseteils 101 auf sie ausgeübt wird, komprimiert vor.

Unmittelbar unterhalb des Kontaktabschnitts weist das Gehäuseteil 101 die umlaufende Sicke 133 auf. Die Sicke 133 ist schwach ausgeprägt und ragt auf der Innenseite des Gehäuseteils 101 weniger als eine Gehäusewandstärke in den Innenraum 137 hinein.

Die Metallscheibe 111 umfasst in ihrem Zentrum die metallische Membran 151, die als bistabiles Federelement ausgebildet ist. Die Membran 151 wölbt sich in den Innenraum 137 und kontaktiert dort das Kontaktblech 113. Überschreitet der Druck in dem Innenraum 137 einen Schwellwert, so wölbt sich die Membran 151 nach außen und die elektrische Verbindung zwischen der Metallscheibe 111 und dem Kontaktblech 113 wird gekappt. Um zu gewährleisten, dass ein elektrischer Kontakt zwischen der Metallscheibe 111 und dem Kontaktblech 113 ausschließlich über die Membran 151 erfolgen kann, umfasst das Kontaktelement 110 weiterhin den Distanzhalter 189. Bei diesem handelt es sich um einen Kunststoffring.

Das Kontaktblech 113 umfasst ein Loch 187, um zu gewährleisten, dass der durch den Distanzhalter 189, das Kontaktblech 113 und die Metallscheibe 111 begrenzte Raum in kommunizierender Verbbindung mit dem Innenraum 137 steht.

## Patentansprüche

1. Energiespeicherzelle (100) mit den Merkmalen
a. die Zelle umfasst einen Elektroden-Separator-Verbund (104) mit der Sequenz Anode / Separator / Kathode,
b. der Elektroden-Separator-Verbund (104) liegt in Form eines zylindrischen Wickels mit zwei endständigen Stirnseiten (104b, 104c) und einem Wickelmantel (104a) vor,
c. die Zelle umfasst ein Gehäuse, das ein metallisches, rohrförmig ausgebildetes Gehäuseteil (101) mit einer endständigen kreisförmigen Öffnung (101c) umfasst,
d. in dem Gehäuse ist der als Wickel ausgebildete Elektroden-Separator-Verbund (104) axial ausgerichtet, so dass der Wickelmantel (104a) an der Innenseite (101b) des rohrförmig ausgebildeten Gehäuseteils (101) anliegt,
e. die Anode ist bandförmig ausgebildet und umfasst einen bandförmigen Anodenstromkollektor (115) mit einem ersten Längsrand (115a) und einem zweiten Längsrand,
f. der Anodenstromkollektor (115) umfasst einen streifenförmigen Hauptbereich, der mit einer Schicht aus negativem Elektrodenmaterial (155) beladen ist, sowie einen freien Randstreifen (117), der sich entlang des ersten Längsrands (115a) erstreckt und der nicht mit dem Elektrodenmaterial (155) beladen ist,
g. die Kathode ist bandförmig ausgebildet und umfasst einen bandförmigen Kathodenstromkollektor (125) mit einem ersten Längsrand (125a) und einem zweiten Längsrand,
h. der Kathodenstromkollektor (125) umfasst einen streifenförmigen Hauptbereich, der mit einer Schicht aus positivem Elektrodenmaterial (123) beladen ist, sowie einen freien Randstreifen (121), der sich entlang des ersten Längsrands (125a) erstreckt und der nicht mit dem Elektrodenmaterial (123) beladen ist,
i. die Anode und die Kathode sind derart ausgebildet und/oder innerhalb des Elektroden-Separator-Verbunds (104) derart zueinander angeordnet, dass der erste Längsrand (115a) des Anodenstromkollektors (115) aus einer der endständigen Stirnseiten (104b, 104c) und der erste Längsrand (125a) des Kathodenstromkollektors (125) aus der anderen der endständigen Stirnseiten (104b, 104c) austritt,
j. die Zelle umfasst ein zumindest teilweise metallisch ausgebildetes Kontaktelement (110), das in unmittelbarem Kontakt mit einem der ersten Längsränder (115a, 125a) steht und das mit diesem Längsrand durch Verschweißung verbunden ist,
sowie den zusätzlichen kennzeichnenden Merkmalen
k. das Kontaktelement (110) umfasst einen kreisförmigen Rand (110a) und verschließt die endständige kreisförmige Öffnung (101c) des rohrförmig ausgebildeten Gehäuseteils (101) gas- und flüssigkeitsdicht, und
l. das Kontaktelement (110) ist oder umfasst eine metallische Membran (111; 151), die elektrisch mit dem einen der ersten Längsränder (115a, 125a) verbunden ist und sich wölbt, wenn ein Druck in dem Gehäuse einen Schwellwert überschreitet, wobei der elektrische Kontakt des Kontaktelements zu dem einen der ersten Längsränder (115a, 125a) verloren geht.

2. Energiespeicherzelle nach Anspruch 1 mit den folgenden zusätzlichen Merkmalen:
a. Das Kontaktelement (110) umfasst als Membran eine Metallscheibe (111) sowie weiterhin einen Poldeckel (112), die jeweils einen kreisförmigen Umfang aufweisen.
b. Die Metallscheibe (111) steht in unmittelbarem Kontakt mit dem einen der ersten Längsränder (115a, 125a) und ist mit diesem Längsrand durch Verschweißung verbunden.
c. Die Metallscheibe (111) und der Poldeckel (112) schließen einen Zwischenraum (116) ein, in den sich die Metallscheibe (111) bei Überschreitung des Schwellwerts wölbt.
d. In dem Zwischenraum (116) ist mindestens ein Distanzelement (129) angeordnet, das eine Wölbung in den Zwischenraum (116) unterhalb des Schwellwerts unterbindet und das bei Überschreiten des Schwellwerts kollabiert und/oder komprimiert wird.

3. Energiespeicherzelle nach Anspruch 2 mit mindestens einem der folgenden zusätzlichen Merkmale:
a. Die Metallscheibe (111) weist auf einer ihrer Seiten mindestens eine rinnenförmige und/oder punktförmige Vertiefung (179) auf, die auf ihrer anderen Seite als mindestens eine linienförmige und/oder punktförmige Erhöhung hervortritt.
b. Die Metallscheibe (111) liegt mit der Seite mit der mindestens einen Erhöhung auf dem einen der ersten Längsränder (115a, 125a) auf.
c. Die mindestens eine Erhöhung und der eine der ersten Längsränder (115a, 125a) sind über mindestens einen Schweißpunkt und/oder mindestens eine Schweißnaht verbunden.

4. Energiespeicherzelle nach Anspruch 3 mit den folgenden zusätzlichen Merkmalen:
a. Die Metallscheibe (111) weist auf einer ihrer Seiten mehrere rinnenförmige Vertiefungen (179) in vorzugsweise sternförmige Anordnung auf, die auf ihrer anderen Seite als linienförmige Erhöhungen hervortreten.
b. Die Metallscheibe (111) umfasst in jeder der rinnenförmigen Vertiefungen (179) mindestens eine Schweißnaht in Folge einer Verschweißung der Metallscheibe (111) mit dem einen der ersten Längsränder (115a, 125a).

5. Energiespeicherzelle nach einem der Ansprüche 2 bis 4 mit mindestens einem der folgenden zusätzlichen Merkmale:
a. das Kontaktelement (110) umfasst neben der Metallscheibe (111) ein Kontaktblech (113).
b. Das Kontaktblech (113) steht in unmittelbarem Kontakt mit dem einen der ersten Längsränder (115a, 125a) und ist mit diesem Längsrand durch Verschweißung verbunden.
c. Das Kontaktblech (113) ist sternförmig ausgebildet und umfasst ein Zentrum 113a sowie mindestens drei streifenförmige Fortsätze 113b in sternförmiger Anordnung.
d. Die Metallscheibe (111) weist zusätzlich zu den rinnenförmigen Vertiefungen (179) auf einer ihrer Seiten eine sternförmige Vertiefung auf, in welcher das Kontaktblech (113) positioniert ist.
e. Zwischen der Metallscheibe (111) und dem Kontaktblech (113) ist mindestens ein Isoliermittel angeordnet, das die streifenförmigen Fortsätze von der Metallscheibe isoliert.
f. Die Metallscheibe (111) und das Zentrum des Kontaktblechs (113) sind mittels Verschweißung unmittelbar miteinander verbunden.

6. Energiespeicherzelle nach Anspruch 1 mit den folgenden zusätzlichen Merkmalen:
a. das Kontaktelement (110) umfasst als Membran eine Metallscheibe (111) sowie weiterhin einen Poldeckel (112), die jeweils einen kreisförmigen Umfang aufweisen.
b. das Kontaktelement (110) umfasst ein Kontaktblech (113), das in unmittelbarem Kontakt mit dem einen der ersten Längsränder (115a, 125a) steht und mit diesem Längsrand durch Verschweißung verbunden ist.
c. Die Metallscheibe (111) und der Poldeckel (112) schließen einen Zwischenraum (116) ein, in den sich die Metallscheibe (111) bei Überschreitung des Schwellwerts wölbt.
d. In dem Zwischenraum (116) ist mindestens ein Distanzelement (129) angeordnet, das eine Wölbung in den Zwischenraum (116) unterhalb des Schwellwerts unterbindet und das bei Überschreiten des Schwellwerts kollabiert und/oder komprimiert wird.
e. Die Metallscheibe (111) und das Kontaktblech (113) sind mittels Verschweißung unmittelbar miteinander verbunden.

7. Energiespeicherzelle nach Anspruch 1 mit den folgenden zusätzlichen Merkmalen:
a. das Kontaktelement (110) umfasst eine Metallscheibe (111), die einen kreisförmigen Umfang aufweist, sowie ein Kontaktblech (113).
b. Das Kontaktblech (113) steht in unmittelbarem Kontakt mit dem einen der ersten Längsränder (115a, 125a) und ist mit diesem Längsrand durch Verschweißung verbunden.
c. Die Metallscheibe (111) und das Kontaktblech (113) sind durch mindestens einen elektrisch isolierenden Distanzhalter (189) voneinander getrennt.
d. Die Metallscheibe (111) umfasst die metallische Membran (151) oder ist bereichsweise als die Membran (151) ausgebildet.
e. Die Membran (151) steht bis zu einer Überschreitung des Schwellwerts in elektrischem (bevorzugt unmittelbarem) Kontakt mit dem Kontaktblech (113).

8. Energiespeicherzelle nach Anspruch 7 mit dem folgenden zusätzlichen Merkmal:
a. Die Membran (151) ist als Federelement ausgebildet, das bei Überschreitung des Schwellwerts aus einem ersten stabilen Zustand in einen zweiten stabilen oder metastabilen Zustand überführt wird.

9. Energiespeicherzelle nach Anspruch 7 oder nach Anspruch 8 mit den folgenden zusätzlichen Merkmalen:
a. Das Kontaktelement (110) umfasst zusätzlich zu der Metallscheibe (111) einen Poldeckel (112), der einen kreisförmigen Umfang aufweist.
b. Die Metallscheibe (111) und der Poldeckel (112) schließen einen Zwischenraum (116) ein, in den sich die Membran (151) bei Überschreitung des Schwellwerts wölbt.

10. Energiespeicherzelle nach einem der vorhergehenden Ansprüche mit den folgenden zusätzlichen Merkmalen:
a. Die Zelle umfasst eine ringförmige Dichtung (103) aus einem elektrisch isolierenden Material, die den kreisförmigen Rand (110a) des Kontaktelements (110) umschließt.
b. Das Kontaktelement (110) mit der Dichtung (103) ist derart in dem rohrförmig ausgebildeten Gehäuseteil (101) angeordnet, dass die ringförmige Dichtung (103) entlang einer umlaufenden Kontaktzone an der Innenseite (101b) des rohrförmig ausgebildeten Gehäuseteils (101) anliegt und das Kontaktelement (110) mit der Dichtung (103) die endständige kreisförmige Öffnung (101c) des rohrförmig ausgebildeten Gehäuseteils (101) verschließt.

11. Energiespeicherzelle nach einem der Ansprüche 1 bis 9 mit den folgenden zusätzlichen Merkmalen:
a. Das Kontaktelement (110) ist derart in dem rohrförmig ausgebildeten Gehäuseteil (101) angeordnet, dass sein Rand (110a) entlang einer umlaufenden Kontaktzone an der Innenseite (101b) des rohrförmig ausgebildeten Gehäuseteils (101) anliegt.
b. Der Rand (110a) des Kontaktelements (110) ist mit dem rohrförmig ausgebildeten Gehäuseteil (101) über eine umlaufende Schweißnaht verbunden (101).

12. Energiespeicherzelle nach einem der vorhergehenden Ansprüche mit dem folgenden zusätzlichen Merkmal:
a. Das Kontaktelement (110) umfasst ein Sicherheitsventil, über das bei Überschreiten eines weiteren Druckschwellwerts Druck aus dem Gehäuse entweichen kann.

13. Energiespeicherzelle nach Anspruch 1 mit dem folgenden zusätzlichen Merkmal:
a. Die metallische Membran (111; 151) ist als Federelement ausgebildet, das bei Überschreitung des Schwellwerts aus einem ersten stabilen Zustand in einen zweiten stabilen oder metastabilen Zustand überführt wird.

## Claims

1. An energy storage cell (100) having the following features:
a. the cell comprises an electrode-separator assembly (104) having the sequence of anode/separator/cathode,
b. the electrode-separator assembly (104) takes the form of a cylindrical winding having two terminal end faces (104b, 104c) and a wound jacket (104a),
c. the cell comprises a housing comprising a metallic, tubular housing portion (101) with a terminal circular opening (101c),
d. in the housing, the electrode-separator assembly (104) that takes the form of a winding is aligned axially such that the wound jacket (104a) adjoins the inside (101b) of the tubular housing portion (101),
e. the anode is in ribbon form and comprises an anode current collector (115) in ribbon form with a first longitudinal edge (115a) and a second longitudinal edge,
f. the anode current collector (115) comprises a main region in strip form, laden with a layer of negative electrode material (155), and a free edge strip (117) that extends along the first longitudinal edge (115a) and is not laden with the electrode material (155),
g. the cathode is in ribbon form and comprises a cathode current collector (125) in ribbon form with a first longitudinal edge (125a) and a second longitudinal edge,
h. the cathode current collector (125) comprises a main region in strip form, laden with a layer of positive electrode material (123), and a free edge strip (121) that extends along the first longitudinal edge (125a) and is not laden with the electrode material (123),
i. the anode and the cathode are formed and/or arranged with respect to one another within the electrode-separator assembly (104) such that the first longitudinal edge (115a) of the anode current collector (115) surpasses one of the terminal end faces (104b, 104c), and the first longitudinal edge (125a) of the cathode current collector (125) surpasses the other of the terminal end faces (104b, 104c),
j. the cell comprises an at least partly metallic contact element (110) which is in direct contact with one of the first longitudinal edges (115a, 125a) and which is connected to this longitudinal edge by welding,
and having the following additional characterizing features:
k. the contact element (110) comprises a circular edge (110a) and closes the terminal circular opening (101c) of the tubular housing portion (101) in a gas- and liquid-tight manner, and
l. the contact element (110) is or comprises a metallic membrane (111; 151) which is electrically connected to one of the first longitudinal edges (115a, 125a) and bends when a pressure in the housing exceeds a threshold, with loss of electrical contact of the contact element to said first longitudinal edge (115a, 125a).

2. The energy storage cell as claimed in claim 1 having the following additional features:
a. the contact element (110) comprises, as membrane, a metal disk (111) and also a terminal cover (112), each of which have a circular circumference.
b. the metal disk (111) is in direct contact with one of the first longitudinal edges (115a, 125a) and is bonded by welding to said longitudinal edge.
c. the metal disk (111) and the terminal cover (112) enclose an interspace (116) into which the metal disk (111) bends on exceedance of the threshold.
d. disposed in the interspace (116) is at least one spacer element (129) that prevents bending into the interspace (116) below the threshold and collapses and/or is compressed on exceedance of the threshold.

3. The energy storage cell as claimed in claim 2 having at least one of the following additional features:
a. the metal disk (111) on one of its sides has at least one depression (179) in the form of a channel and/or dot that protrudes on the other side thereof as at least one linear and/or dot-shaped elevation.
b. the metal disk (111) adjoins one of the first longitudinal edges (115a, 125a) by the side having the at least one elevation.
c. the at least one elevation and one of the first longitudinal edges (115a, 125a) are joined via at least one weld point and/or at least one weld seam.

4. The energy storage cell as claimed in claim 3 having the following additional features:
a. the metal disk (111) has, on one of its sides, multiple channel-shaped depressions (179) in a preferably star-shaped arrangement that protrude as linear elevations on the other side thereof.
b. the metal disk (111) comprises, in each of the channel-shaped depressions (179), at least one weld seam as a result of welding of the metal disk (111) to one of the first longitudinal edges (115a, 125a).

5. The energy storage cell as claimed in any of claims 2 to 4 having at least one of the following additional features:
a. the contact element (110) comprises not only the metal disk (111) but also a contact sheet (113).
b. the contact sheet (113) is in direct contact with one of the first longitudinal edges (115a, 125a) and is bonded by welding to said longitudinal edge.
c. the contact sheet (113) is star-shaped and comprises a center 113a and at least three extensions 113b in strip form, in a star-shaped arrangement.
d. the metal disk (111), in addition to the channel-shaped depressions (179), has on one of its sides a star-shaped depression with the contact sheet (113) positioned therein.
e. at least one insulation means disposed between the metal disk (111) and the contact sheet (113) insulates the extensions in strip form from the metal disk.
f. the metal disk (111) and the center of the contact sheet (113) are bonded directly to one another by means of welding.

6. The energy storage cell as claimed in claim 1 having the following additional features:
a. the contact element (110) comprises, as membrane, a metal disk (111) and also a terminal cover (112), each of which have a circular circumference.
b. the contact element (110) comprises a contact sheet (113) which is in direct contact with one of the first longitudinal edges (115a, 125a) and is bonded by welding to said longitudinal edge.
c. the metal disk (111) and the terminal cover (112) enclose an interspace (116) into which the metal disk (111) bends on exceedance of the threshold.
d. disposed in the interspace (116) is at least one spacer element (129) that prevents bending into the interspace (116) below the threshold and collapses and/or is compressed on exceedance of the threshold.
e. the metal disk (111) and contact sheet (113) are bonded directly to one another by means of welding.

7. The energy storage cell as claimed in claim 1 having the following additional features:
a. the contact element (110) comprises a metal disk (111) having a circular circumference, and a contact sheet (113).
b. the contact sheet (113) is in direct contact with one of the first longitudinal edges (115a, 125a) and is bonded by welding to said longitudinal edge.
c. the metal disk (111) and the contact sheet (113) are separated from one another by at least one electrically insulating spacer (189).
d. the metal disk (111) comprises the metallic membrane (151) or is formed as the membrane (151) in some regions.
e. the membrane (151) is in electrical (preferably direct) contact with the contact sheet (113) until exceedance of the threshold.

8. The energy storage cell as claimed in claim 7 having the following additional feature:
a. the membrane (151) takes the form of a spring element which, on exceedance of the threshold, is converted from a first stable state to a second stable or metastable state.

9. The energy storage cell as claimed in claim 7 or as claimed in claim 8 having the following additional features:
a. the contact element (110) comprises, in addition to the metal disk (111), a terminal cover (112) having a circular circumference.
b. the metal disk (111) and the terminal cover (112) enclose an interspace (116) into which the membrane (151) bends on exceedance of the threshold.

10. The energy storage cell as claimed in any of the preceding claims having the following additional features:
a. the cell comprises an annular seal (103) made of an electrically insulating material that surrounds the circular edge (110a) of the contact element (110).
b. the contact element (110) together with the seal (103) is disposed in the tubular housing portion (101) in such a way that the annular seal (103) adjoins the inside (101b) of the tubular housing portion (101) along a circumferential contact zone and the contact element (110) together with the seal (103) seals the terminal circular opening (101c) of the tubular housing portion (101).

11. The energy storage cell as claimed in any of claims 1 to 9 having the following additional features:
a. the contact element (110) is arranged in the tubular housing portion (101) such that the edge (110a) thereof runs along a circumferential contact zone on the inside (101b) of the tubular housing portion (101).
b. the edge (110a) of the contact element (110) is joined (101) to the tubular housing portion (101) via a circumferential weld seam.

12. The energy storage cell as claimed in any of the preceding claims having the following additional feature:
a. the contact element (110) comprises a safety valve via which pressure can escape from the housing on exceedance of a further pressure threshold.

13. The energy storage cell as claimed in claim 1 having the following additional feature:
a. the metallic membrane (111; 151) takes the form of a spring element which, on exceedance of the threshold, is converted from a first stable state to a second stable or metastable state.

## Revendications

1. Cellule d'accumulation d'énergie (100) avec les caractéristiques
a. la cellule comprend un ensemble électrodes-séparateur (104) avec la séquence anode / séparateur / cathode,
b. l'ensemble électrodes-séparateur (104) est présent sous la forme d'un enroulement cylindrique avec deux faces frontales d'extrémité (104b, 104c) et une enveloppe d'enroulement (104a),
c. la cellule comprend un boîtier, qui comprend une partie de boîtier (101) métallique tubulaire avec une ouverture (101c) circulaire d'extrémité,
d. l'ensemble électrodes-séparateur (104) réalisé sous forme d'enroulement est orienté axialement dans le boîtier de telle sorte que l'enveloppe d'enroulement (104a) repose sur la face intérieure (101b) de la partie de boîtier (101) tubulaire,
e. l'anode est formée en bande et comprend un collecteur de courant d'anode (115) en forme de bande avec un premier bord longitudinal (115a) et un second bord longitudinal,
f. le collecteur de courant d'anode (115) comprend une zone principale en forme de bande qui est chargée avec une couche d'un matériau d'électrode négative (155), ainsi qu'une bande de bord libre (117) qui s'étend le long du premier bord longitudinal (115a) et qui n'est pas chargée avec le matériau d'électrode (155),
g. la cathode est formée en bande et comprend un collecteur de courant de cathode (125) en forme de bande avec un premier bord longitudinal (125a) et un second bord longitudinal,
h. le collecteur de courant de cathode (125) comprend une zone principale en forme de bande qui est chargée avec une couche d'un matériau d'électrode positive (123), ainsi qu'une bande de bord libre (121) qui s'étend le long du premier bord longitudinal (125a) et qui n'est pas chargée avec le matériau d'électrode (123),
i. l'anode et la cathode sont formées de telle manière et/ou sont disposées à l'intérieur de l'ensemble électrodes-séparateur (104) de telle manière que le premier bord longitudinal (115a) du collecteur de courant d'anode (115) sort d'une des faces frontales d'extrémité (104b, 104c), et le premier bord longitudinal (125a) du collecteur de courant de cathode (125) sort de l'autre des faces frontales d'extrémité (104b, 104c),
j. la cellule comprend un élément de contact (110) formé au moins en partie de manière métallique, qui est en contact direct avec l'un des premiers bords longitudinaux (115a, 125a) et qui est relié audit bord longitudinal par soudage,
ainsi qu'avec les caractéristiques caractérisantes supplémentaires
k. l'élément de contact (110) comprend un bord circulaire (110a) et ferme l'ouverture (101c) circulaire d'extrémité de la partie de boîtier (101) tubulaire de manière étanche aux gaz et au liquide, et
l. l'élément de contact (110) est ou comprend une membrane métallique (111 ; 151), qui est électriquement reliée à l'un des premiers bords longitudinaux (115a, 125a) et se bombe lorsqu'une pression dans le boîtier dépasse une valeur de seuil, le contact électrique de l'élément de contact avec l'un des premiers bords longitudinaux (115a, 125a) étant perdu.

2. Cellule d'accumulation d'énergie selon la revendication 1 avec les caractéristiques supplémentaires suivantes :
a. L'élément de contact (110) comprend comme membrane un disque métallique (111) ainsi que par ailleurs un couvercle de pôle (112), qui comportent chacun une périphérie circulaire.
b. Le disque métallique (111) est en contact direct avec l'un des premiers bords longitudinaux (115a, 125a) et est relié audit bord longitudinal par soudage.
c. Le disque métallique (111) et le couvercle de pôle (112) renferment un espace intermédiaire (116), dans lequel le disque métallique (111) se bombe en cas de dépassement de la valeur de seuil.
d. Au moins un élément d'écartement (129), qui empêche un bombement dans l'espace intermédiaire (116) en dessous de la valeur de seuil et qui s'effondre et/ou se compresse en cas de dépassement de la valeur de seuil, est disposé dans l'espace intermédiaire (116).

3. Cellule d'accumulation d'énergie selon la revendication 2 avec au moins une des caractéristiques supplémentaires suivantes :
a. Le disque métallique (111) comporte sur l'une de ses faces au moins un renfoncement (179) en forme de gouttière et/ou de point, qui apparaît sur l'autre face comme au moins une partie surélevée en forme de ligne et/ou de point.
b. Le disque métallique (111) repose avec la face avec l'au moins une partie surélevée sur l'un des premiers bords longitudinaux (115a, 125a).
c. L'au moins une partie surélevée et l'un des premiers bords longitudinaux (115a, 125a) sont reliés par au moins un point de soudure et/ou au moins un cordon de soudure.

4. Cellule d'accumulation d'énergie selon la revendication 3 avec les caractéristiques supplémentaires suivantes :
a. Le disque métallique (111) comporte sur l'une de ses faces plusieurs renfoncements (179) en forme de gouttière, de préférence selon une disposition en forme d'étoile, qui apparaissent sur l'autre face comme des parties surélevées en forme de ligne.
b. Le disque métallique (111) comprend au moins un cordon de soudure dans chacun des renfoncements (179) en forme de gouttière suite à un soudage du disque métallique (111) à l'un des premiers bords longitudinaux (115a, 125a).

5. Cellule d'accumulation d'énergie selon l'une des revendications 2 à 4 avec au moins une des caractéristiques supplémentaires suivantes :
a. L'élément de contact (110) comprend, outre le disque métallique (111), une tôle de contact (113).
b. La tôle de contact (113) est en contact direct avec l'un des premiers bords longitudinaux (115a, 125a) et est reliée audit bord longitudinal par soudage.
c. La tôle de contact (113) est formée en forme d'étoile et comprend un centre (113a) ainsi qu'au moins trois prolongements (113b) en forme de bande selon une disposition en forme d'étoile.
d. Le disque métallique (111) comporte, en plus des renfoncements (179) en forme de gouttière, sur l'une de ses faces un renfoncement en forme d'étoile, dans lequel la tôle de contact (113) est positionnée.
e. Au moins un agent isolant, qui isole les prolongements en forme de bande du disque métallique, est disposé entre le disque métallique (111) et la tôle de contact (113).
f. Le disque métallique (111) et le centre de la tôle de contact (113) sont reliés directement l'un à l'autre par soudage.

6. Cellule d'accumulation d'énergie selon la revendication 1 avec les caractéristiques supplémentaires suivantes :
a. L'élément de contact (110) comprend comme membrane un disque métallique (111) ainsi que par ailleurs un couvercle de pôle (112), qui comportent chacun une périphérie circulaire.
b. L'élément de contact (110) comprend une tôle de contact (113) qui est en contact direct avec l'un des premiers bords longitudinaux (115a, 125a) et qui est reliée audit bord longitudinal par soudage.
c. Le disque métallique (111) et le couvercle de pôle (112) renferment un espace intermédiaire (116), dans lequel le disque métallique (111) se bombe en cas de dépassement de la valeur de seuil.
d. Au moins un élément d'écartement (129), qui empêche un bombement dans l'espace intermédiaire (116) en dessous de la valeur de seuil et qui s'effondre et/ou se compresse en cas de dépassement de la valeur de seuil, est disposé dans l'espace intermédiaire (116).
e. Le disque métallique (111) et la tôle de contact (113) sont reliés directement l'un à l'autre par soudage.

7. Cellule d'accumulation d'énergie selon la revendication 1 avec les caractéristiques supplémentaires suivantes :
a. L'élément de contact (110) comprend un disque métallique (111), qui comporte une périphérie circulaire, ainsi qu'une tôle de contact (113).
b. La tôle de contact (113) est en contact direct avec l'un des premiers bords longitudinaux (115a, 125a) et est reliée audit bord longitudinal par soudage.
c. Le disque métallique (111) et la tôle de contact (113) sont séparés l'un de l'autre par au moins un écarteur (189) électriquement isolant.
d. Le disque métallique (111) comprend la membrane métallique (151) ou est formé par endroits comme la membrane (151).
e. La membrane (151) est en contact électrique (de préférence direct) avec la tôle de contact (113) jusqu'à un dépassement de la valeur de seuil.

8. Cellule d'accumulation d'énergie selon la revendication 7 avec la caractéristique supplémentaire suivante :
a. La membrane (151) est formée comme un élément de ressort qui, en cas de dépassement de la valeur de seuil, est transféré d'un premier état stable à un deuxième état stable ou métastable.

9. Cellule d'accumulation d'énergie selon la revendication 7 ou la revendication 8 avec les caractéristiques supplémentaires suivantes :
a. L'élément de contact (110) comprend, en plus du disque métallique (111), un couvercle de pole (112), qui comporte une périphérie circulaire.
b. Le disque métallique (111) et le couvercle de pôle (112) renferment un espace intermédiaire (116), dans lequel la membrane (151) se bombe en cas de dépassement de la valeur de seuil.

10. Cellule d'accumulation d'énergie selon l'une des revendications précédentes avec les caractéristiques supplémentaires suivantes :
a. La cellule comprend un joint d'étanchéité (103) annulaire composé d'un matériau électriquement isolant, qui renferme le bord circulaire (110a) de l'élément de contact (110).
b. L'élément de contact (110) avec le joint d'étanchéité (103) est disposé dans la partie de boîtier (101) tubulaire de telle manière que le joint d'étanchéité (103) annulaire repose le long d'une zone de contact périphérique sur la face intérieure (101b) de la partie de boîtier (101) tubulaire et l'élément de contact (110) ferme avec le joint d'étanchéité (103) l'ouverture (101c) circulaire d'extrémité de la partie de boîtier (101) tubulaire.

11. Cellule d'accumulation d'énergie selon l'une des revendications 1 à 9, avec les caractéristiques supplémentaires suivantes :
a. L'élément de contact (110) est disposé dans la partie de boîtier (101) tubulaire de telle manière que son bord (110a) repose le long d'une zone de contact périphérique sur la face intérieure (101b) de la partie de boîtier (101) tubulaire.
b. Le bord (110a) de l'élément de contact (110) est relié à la partie de boîtier (101) tubulaire par un cordon de soudure périphérique (101).

12. Cellule d'accumulation d'énergie selon l'une des revendications précédentes avec la caractéristique supplémentaire suivante :
a. L'élément de contact (110) comprend une soupape de sécurité par laquelle la pression peut s'échapper du boîtier en cas de dépassement d'une autre valeur de seuil de pression.

13. Cellule d'accumulation d'énergie selon la revendication 1 avec la caractéristique supplémentaire suivante :
a. La membrane métallique (111 ; 151) est formée comme un élément de ressort qui, en cas de dépassement de la valeur de seuil, est transféré d'un premier état stable à un deuxième état stable ou métastable.
